Europäisches Patentamt

European Patent Office

Office européen des brevets

(19)

(11) **EP 1 324 505 A1**

(12) **EUROPEAN PATENT APPLICATION**

(43) Date of publication:
02.07.2003 Bulletin 2003/27

(51) Int Cl.⁷: $H04B\ 1/707$

(21) Application number: 02017812.5

(22) Date of filing: 07.08.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **27.12.2001 JP 2001396071**

(71) Applicant: **MITSUBISHI DENKI KABUSHIKI KAISHA**
**Tokyo 100-8310 (JP)**

(72) Inventor: **Takano, Michiaki,**
**Mitsubishi Denki Kabushiki K.**
**Tokyo 100-8310 (JP)**

(74) Representative: **Popp, Eugen, Dr. et al**
**MEISSNER, BOLTE & PARTNER**
**Widenmayerstrasse 48**
**80538 München (DE)**

(54) **Spreading code assigning method and base transceiver station**

(57)    A multiplexed chip bit sequence {B0(16,k); k=00-15} is subject to butterfly computation so as to retrieve a symbol bit sequence for each one of channelization codes {Cch(16,k);k=00-15}. By omitting butterfly computation steps corresponding to unassigned channelization codes, or by assigning codes so that the number of unnecessary butterfly computation steps is increased, the despreading process in the mobile terminal is reduced in scale.

# FIG.7

EP 1 324 505 A1

**Description**

BACKGROUND OF THE INVENTION

1. Field of the Invention

The present invention relates to a despreading method, a spreading code assigning method, a mobile terminal and a base transceiver station for use in a code division multiple access (CDMA) mobile communications system.

In a mobile communications system of a wide band CDMA (W-CDMA) type, signals are multiplexed using spreading codes orthogonal to each other. There are two types of spreading codes: channelization codes having a period equal to a symbol length; and scrambling codes having a period longer than a symbol length. These two types of codes are employed for dual spreading.

3rd Generation partnership Project (3GPP) Technical Specification (TS) 25.213V3.6.0(2001-06) describes how channelization codes are produced. Orthogonal variable spreading factor (OVSF) codes are used to produce channelization codes. Accordingly, a symbol rate is made variable by changing a spreading factor (SF) under a constant chip rate. With this, variable transmission rates are dealt with. Normally, however, the spreading factor is maintained at a constant level for use. Given that SF=16, a total of 16 different channelization codes Cch(SF,k) are produced, where k indicates a numeral used for identification of a channel. When SF=16, k=0-15.

3GPP Technical Report (TR) 25.848V4.0.0(2001-03) describes channelization codes for downstream packet transmission from a base transceiver station to a mobile terminal.

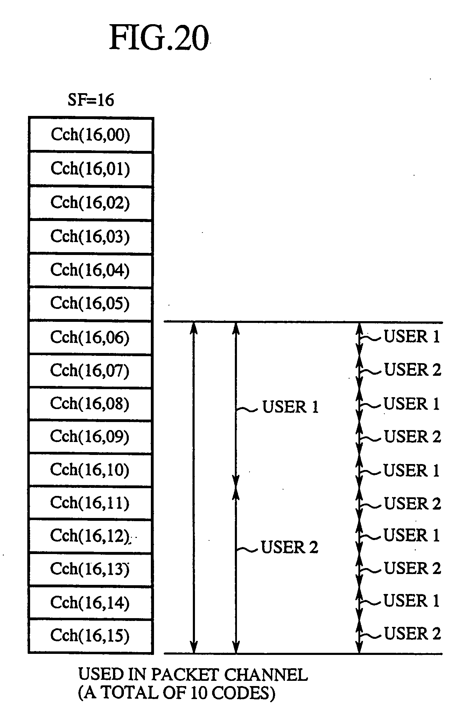

Fig. 20 shows how spreading codes are assigned in multi-code packet transmission. In the case of Fig. 20, SF=16, k=0-15 so that Cch(SF,k)=Cch(16,00)-Cch(16,15). Multi-code transmission is known as a method whereby a plurality of channelization codes are designated as one set (one segment) for use in communication between a base transceiver station and a mobile terminal. It is assumed here that a total of ten codes (k=6-15) are used in packet channels and a segment is defined as a set of five codes.

The channelization codes (k=6-10) may be assigned to user 1 and the channelization codes (k=11-15) may be assigned to user 2, as shown in Fig. 20. Alternatively, as also shown in Fig. 20, the channelization codes (k=6, 8, 10, 12, 14) may be assigned to user 1 and the channelization codes (k=7, 9, 11, 13, 15) may be assigned to user 2. In 3GPP, no prescriptions are announced as to how spreading codes are assigned. The volume of computation in a mobile terminal may be increased depending on how the spreading codes are assigned.

In multi-code transmission, it is necessary to perform a despreading process in a mobile terminal using a plurality of codes. A butter computation circuit is known to provide a method to enable this computation using a single circuit. In this method, a single butterfly computation circuit is used to perform despreading using a plurality of codes, resulting in exhaustive butterfly computation being performed to output data for the entire set of codes. However, the entire set of spreading codes are rarely necessary. Butterfly computation directed to the computing of data corresponding to the entire set of spreading codes, some of which are not assigned to the mobile terminal, is a waste of resource.

Japanese Laid-Open Patent Application No. 2-237372 concerns a known art related to butterfly computation used in image data compression.

SUMMARY OF THE INVENTION

Accordingly, general object of the present invention is to provide a despreading method, a spreading code assigning method, a mobile terminal and a base transceiver station in which the aforementioned problem is eliminated.

Another and more specific object is to provide a despreading method, a spreading code assigning method, a mobile terminal and a base transceiver station in which the number of butterfly computation steps is reduced.

The aforementioned objects can be achieved by a despreading method capable of retrieving a plurality of chip bit sequences by subjecting to repeated butterfly computation steps a multiplexed chip bit sequence produced by spreading symbol bit sequences, comprising the steps of: preventing at least one of the butterfly computation steps other than those steps necessary to retrieve those of the plurality of chip bit sequences corresponding to respective spreading codes from being carried out.

Accordingly, the number of butterfly computation steps is reduced so that a despreading process that may be carried out in a mobile terminal is reduced in scale. By omitting the entirety of unnecessary butterfly computation steps other than those necessary to retrieve those of the chip bit sequences corresponding to the assigned spreading codes, the number of butterfly computation steps is further reduced so that the despreading process is further reduced in scale.

The aforementioned objects can also be achieved by a mobile terminal for wireless communication with a base transceiver station comprising: despreading means retrieving a plurality of chip bit sequences by subjecting to repeated butterfly computation steps a multiplexed chip bit sequence produced by spreading symbol bit sequences;

and omitting means preventing at least one of the butterfly computation steps other than those steps necessary to retrieve those of the chip bit sequences corresponding to respective spreading codes assigned to the mobile terminal from being carried out.

Accordingly, the number of butterfly computation steps is reduced so that the despreading process in the mobile terminal is reduced in scale and power consumption is reduced. By allowing the despreading means of the mobile terminal according to the invention to determine butterfly computation steps prevented from being performed, based on spreading codes reported from a base transceiver station, unnecessary butterfly computation steps in the mobile terminal is reduced.

The aforementioned objects can also be achieved by a base transceiver station for wireless communication with a mobile terminal which is capable of retrieving a plurality of chip bit sequences by subjecting to repeated butterfly computation steps a multiplexed chip bit sequence, comprising: spreading means spreading symbol bit sequences so as to produce the plurality of chip bit sequences; multiplexing means producing the multiplexed chip bit sequence by multiplexing the plurality of chip bit sequences; and notification means notifying the mobile terminal of spreading codes assigned to the mobile terminal so that the mobile terminal is capable of determining at least one of the butterfly computation steps prevented from being carried out as being unnecessary to retrieve those of the plurality of chip bit sequences corresponding to the respective spreading codes assigned to the mobile terminal.

Accordingly, unnecessary butterfly computation steps in the mobile terminal are properly omitted.

The aforementioned objects can also be achieved by a spreading code assigning method for assigning spreading codes for spreading symbol bit sequences, comprising: a spreading code assigning step adapted for a despreading process, wherein a plurality of chip bit sequences are retrieved by subjecting to repeated butterfly computation steps a multiplexed chip bit sequence produced by a spreading process, the spreading code assigning step assigning spread codes so that the number of butterfly computation steps necessary to retrieve those of the plurality of chip bit sequences corresponding to the assigned spreading codes, respectively, is smaller than a maximum number required to retrieve the entirety of the chip bit sequences.

Accordingly, the number of unnecessary butterfly computation steps is increased so that the number of butterfly computation required is reduced and the despreading process is reduced in scale. By assigning spreading codes so that the number of butterfly computation steps is minimized, the number of unnecessary butterfly computation steps is maximized. Accordingly, the butterfly computation and the despreading process involving the same are further reduced in scale.

The aforementioned objects can also be achieved by a base transceiver station for wireless communication with a mobile terminal, comprising: a spreading code assigning means assigning spread codes for spreading symbol bit sequences and adapted for a despreading process, wherein a plurality of chip bit sequences are retrieved by subjecting to repeated butterfly computation steps a multiplexed chip bit sequence produced by a spreading process, the spreading code assigning means assigning spread codes so that the number of butterfly computation steps necessary to retrieve those of the plurality of chip bit sequences corresponding to the assigned spreading codes, respectively, is smaller than a maximum number required to retrieve the entirety of the chip bit sequences.

The spreading code assigning method according to the invention is also configured such that only those spreading codes that correspond to symbol bit sequences produced by butterfly computation including first and second computation steps of a second stage are assigned. The scale of butterfly computation is reduced accordingly since at least one of the first and second computation steps becomes unnecessary.

The spreading code assigning method according to the invention may also be configured such that only those spreading codes that correspond to symbol bit sequences produced by butterfly computation including at most three of the first through fourth computation steps of a third stage are assigned. The scale of butterfly computation is reduced accordingly since at least one of the first through fourth computation steps becomes unnecessary.

The spreading code assigning method according to the invention may also be configured such that only those spreading codes that correspond to symbol bit sequences produced by a minimum of the first through fourth computation steps of the third stage are assigned. The scale of butterfly computation is reduced accordingly since at least one of the first through fourth computation steps becomes unnecessary.

The spreading code assigning method according to the invention may also be configured such that only those spreading codes that correspond to symbol bit sequences produced by butterfly computation including at most seven of the first through eighth computation steps of a fourth stage are assigned.

The spreading code assigning method according to the invention may also be configured such that only those spreading codes that correspond to symbol bit sequences produced by a minimum of the first through eighth computation steps of the fourth stage are assigned.

BRIEF DESCRIPTION OF THE DRAWINGS

Other objects and further features of the present invention will be apparent from the following detailed description when read in conjunction with the accompanying drawings, in which:

Fig. 1 shows a construction of a mobile communications system according to a first embodiment of the present invention;
Fig. 2 shows a construction of a base transceiver station of Fig. 1;
Fig. 3 shows an example of construction of a mobile terminal;
Fig. 4 shows a construction of a mobile terminal of Fig. 1;
Fig. 5 shows a construction of a FHT unit of Fig. 4;
Fig. 6 shows a first example of computation performed in a butterfly computation circuit of Fig. 5;
Fig. 7 shows a second example of computation performed in the butterfly computation circuit of Fig. 5;
- Fig. 8 shows a third example of computation performed in the butterfly computation circuit of Fig. 5;
Fig. 9 shows a fourth example of computation performed in the butterfly computation circuit of Fig. 5;
Fig. 10 is a flowchart showing a code assigning process in a base transceiver station of Fig. 1;
Fig. 11 is a flowchart showing a code assigning procedure according to a second embodiment of the present invention;
Fig. 12 shows butterfly computation according to the second embodiment;
Fig. 13 is a flowchart showing a code assigning procedure according to a third embodiment of the present invention;
Fig. 14 shows butterfly computation according to the third embodiment;
Fig. 15 shows butterfly computation according to the third embodiment;
Fig. 16 is a flowchart showing a code assigning procedure according to a fourth embodiment of the present invention;
Fig. 17 shows butterfly computation according to the fourth embodiment;
Fig. 18 is a flowchart showing a code assigning procedure according to a fifth embodiment of the present invention;
Fig. 19 shows butterfly computation according to the fifth embodiment; and
Fig. 20 shows how spreading codes are assigned in multi-code packet transmission.

## DETAILED DESCRIPTION OF THE PREFERRED EMBODIMENTS

First embodiment

(Primary Scrambling, 5-code segmentation)

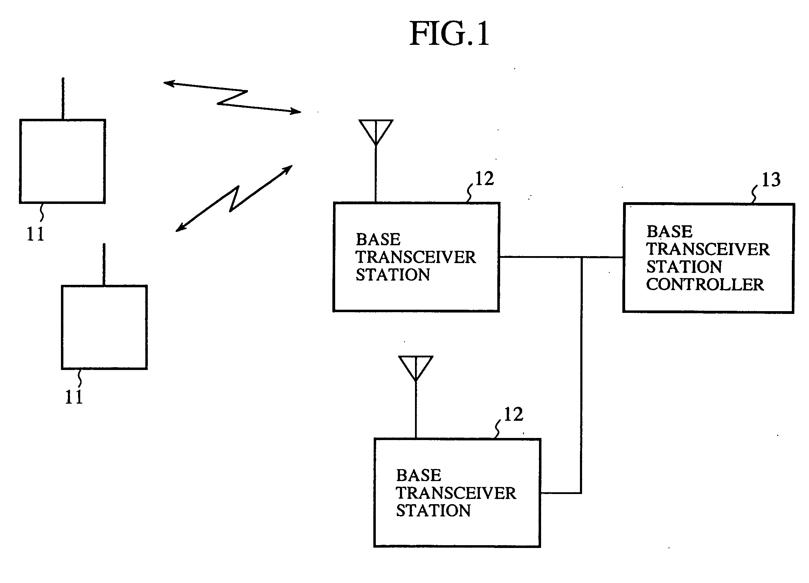

Fig. 1 shows a construction of a mobile communications system according to a first embodiment of the present invention. The mobile communications system comprises a mobile terminal 11, a base transceiver station 12 and a base transceiver station controller 13. The mobile terminal 11 is a terminal carried by a user and capable of wireless communication with the base transceiver station 12 as it is being moved. The base transceiver station 12 is placed at a designated location and capable of simultaneous wireless communication with a plurality of mobile terminals 11. The base transceiver station 12 is connected via a transmission line to a base transceiver station controller 13 that hosts the base transceiver station 12. The base transceiver station 12 is responsible for wired connection of the mobile terminal 11 to a communication circuit. The base transceiver station controller 13 is connected to a plurality of base transceiver stations 12 and is responsible for various types of control related to the base transceiver station 12 and also for circuit connection of the mobile terminal 11 to a public circuit network via the base transceiver station 12.
In the communications system as described above, signals sent from the mobile terminal 11 are transmitted to a destination via the base transceiver station 12, the base transceiver station controller 13 and the public circuit network (not shown), in the stated order. Conversely, signals originated at the destination are transmitted to the mobile terminal 11 via the public circuit network, the base transceiver station controller 13 and the base transceiver station 12, in the stated order.

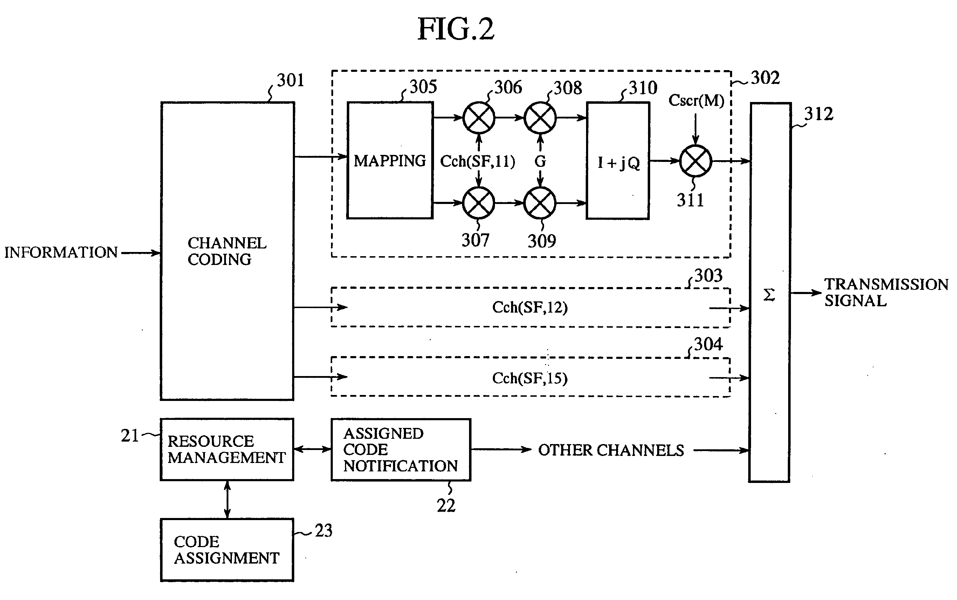

Fig. 2 shows a construction of a base transceiver station shown in Fig. 1. In the illustration, only the construction of a transmitter is shown. The base transceiver station is provided with a channel coding unit 301, a plurality of modulating units 302, 303,...,304, a complex adder 312, a resource management unit 21 and an assigned code notification unit-22.
Information to be transmitted is supplied to the channel coding unit 301 where channel coding is performed. More specifically, cyclic redundancy check codes are appended and steps including turbo coding, rate matching, interleaving and physical channel segmentation are performed. An output of the channel coding unit is supplied to the plurality of modulating units 302, 303,...,304. A mapping unit 305 of the modulating unit 302 converts bits into symbols so that real parts are supplied to a multiplier 306 and imaginary parts are supplied to a multiplier 307. The multiplier 306 performs channelization coding by multiplying the real parts of the symbol by the channelization codes Cch(SF, k). In other words, a symbol bit sequence is converted into a chip bit sequence.

The channelization code Cch(SF,k) is described in 3GPP TS25.213V3.6.0(2001-06), where SF indicates a spreading factor and k indicates a channel identification number. In this example, Cch(16,11) is used. That is, the spreading factor SF=16 and the identification number k=11.

An output of the multiplier 306 is supplied to a multiplier 308 where the output is multiplied by a gain G. An output of the multiplier 308 is supplied to an adder 310. Similarly, the imaginary parts of the symbol are subject to channelization coding in the multiplier 307. An output of the multiplier 307 is multiplied in a multiplier 309 the by the gain G so that the result is supplied to the adder 310. The real signal and the imaginary signal are added by the adder 310. An output of the adder 310 is subject to complex multiplication with Cscr(M) in a multiplier 311.

Cscr(M) indicates a scrambling code, where M is an identification number, which is one of any values 0-8191. Scrambling codes are classified into primary scrambling codes and secondary scrambling codes. A primary scrambling code includes a control channel and a secondary scrambling coed does not. It is assumed here that the primary scrambling code is used. Channels k=0-5 of the channelization codes Cch(16,k) are used as control channels.

The signal subjected to scrambling coding in the multiplier 311 is supplied to a complex adder 312. The modulating units 303 and 304 also perform modulation so that the result thereof is supplied to the complex adder 312. The complex adder 312 subjects the output from the modulating units 302, 303,...304 and the signals of the other channels to complex addition so as to output a result thereof. An output signal of the complex adder 312 is subject to conversion into a radio frequency using waveform shaping filters so that a resultant transmission signal is transmitted to mobile stations via a base transceiver station antenna.

The modulating units 302, 303,...304 and modulating units for signals of the other channels use mutually different channelization codes, while the same one scrambling code Cscr(M) is used according to the first embodiment.

The resource management unit 21 manages information related channelization codes already assigned to the mobile terminal. The assigned code notification unit 22 checks the information managed by the resource management unit 21 so as to notify the mobile terminal of the assigned code. Notification of the code is performed using channels other than the channels used by the modulating units 302, 303,...304. For example, control channels may be used. A code assigning unit 23 assigns a channelization code by referring to the information managed by the resource management unit 21.

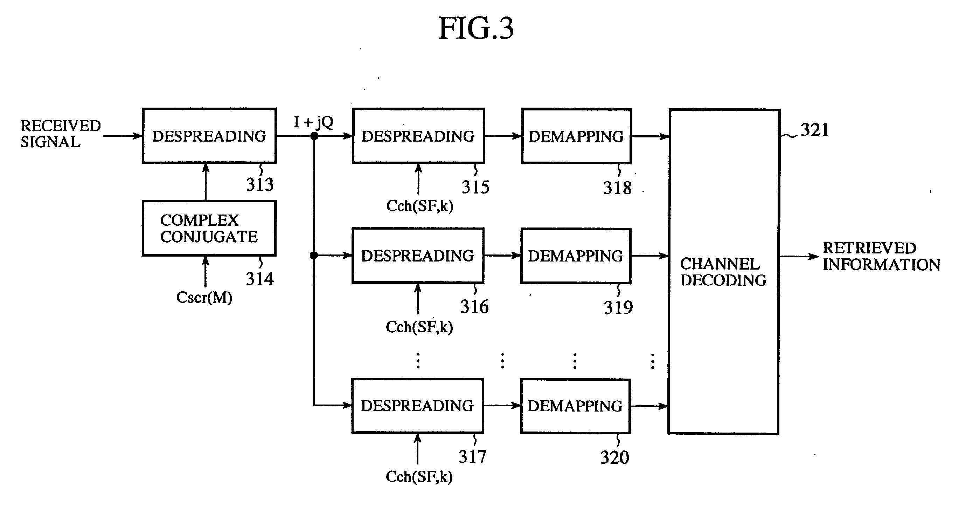

Fig. 3 shows an example of construction of a mobile terminal. In the illustration, only the construction of a receiver of the mobile terminal is shown. The mobile terminal is provided with a despreading unit 313, a complex conjugate unit 313, despreaders 315, 316,...,317, demapping units 318, 319, 320 and a channel decoding unit 321.

A received signal (complex signal) is despread in the despreading unit 313 using a complex conjugate of Cscr (M) produced by the complex conjugate unit 314. In the despreading unit 313, the scrambling code is removed. An output of the despreading unit 313 is supplied to the despreaders 315, 316,...317 for reception of a plurality of codes. The despreader 315 retrieves a corresponding channel by multiplying the signal by a channelization code corresponding to the modulating unit 302 of Fig. 2. The retrieval is based on a principle that the channelization codes are orthogonal to each other so that a desired channelization code produces a correlation at a high level and others do not. Actually, correlation with respect to the undesired channelization codes is not zero due to noise and interference.

The retrieved signal is converted from symbols into bits by the demapping unit 318 so that the resulting bits are supplied to the channel coding unit. Using the despreaders 316,...317, the demapping units 319,...320, the respective desired signals are retrieved using the respective channelization codes. The resultant bits are supplied to the channel decoding unit. In the channel decoding unit 321, physical channel synthesis, deinterleaving, Turbo decoding, CRC removal are performed so that decoded signals are output as retrieved information.

Reception of a reference timing signal, automatic frequency control, automatic gain control, RAKE reception, space diversity and channel estimation are performed according to the known method.

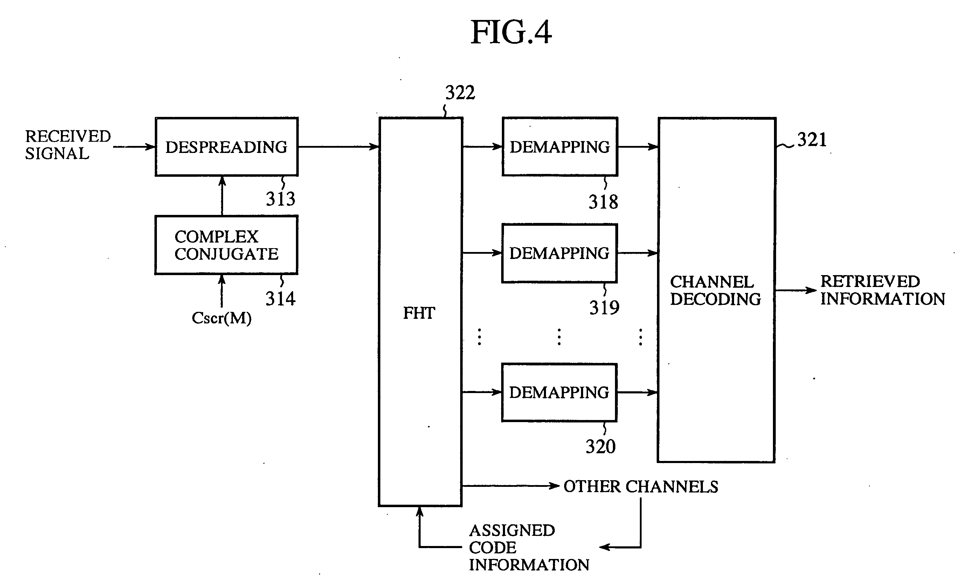

In the construction of Fig. 3, a total of n despreading circuits are required assuming that the number of codes received is n. The circuit scale involving the despreading circuits tends to become large. In order to prevent the scale from becoming excessively large, a process known as fast Hadamard transform is employed (Fig. 4).

Fig. 4 shows a construction of the mobile terminal of Fig. 1. In the illustration, only the construction of a receiver is shown. Those components identical to the corresponding components of Fig. 3 are designated by the same reference numerals. A difference from the construction of Fig. 3 is that a single FHT unit 322 is used instead of the despreading units 315, 316,...317.

The assigned code information transmitted from the assigned code notification unit 22 of the base transceiver station is retrieved via a channel such as the control channel and delivered to the FHT unit 322.

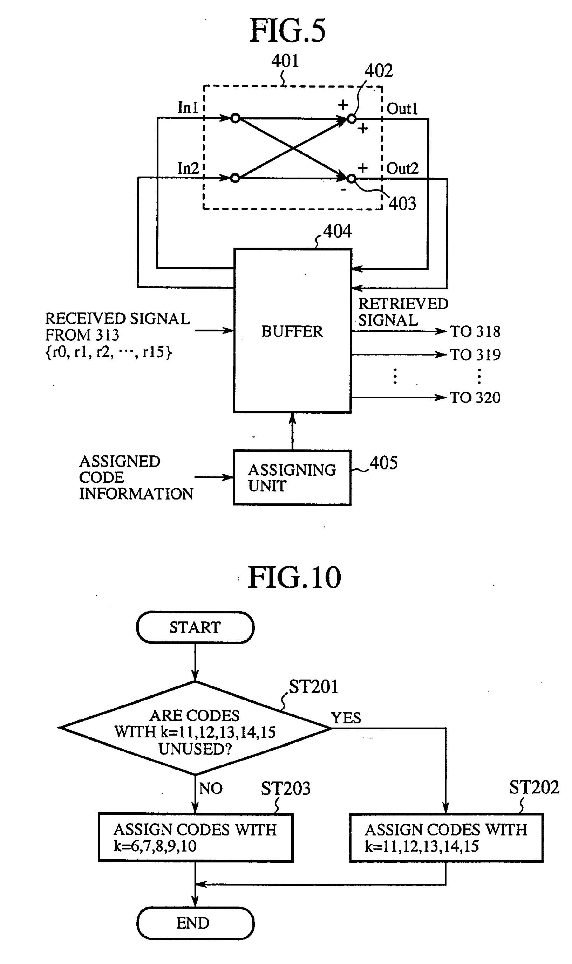

Fig. 5 shows a construction of the FHT unit of Fig. 4. The FTH unit comprises a butterfly computation circuit 401, a buffer 404 and an assigning unit 405. An input of the buffer 404 is connected to an output of the despreading unit 313. An output of the buffer is supplied to the demapping units 318, 319,...320. The butterfly computation circuit 401 comprises adders 402 and 403. The butterfly computation circuit 401 receives input signals In1 and In2 so as to output a result of addition In1+In2 and a result of subtraction In1-In2.

Assigned code information from the base transceiver station is provided to the assigning unit 405. The assigning unit 405 determines steps of of unnecessary butterfly computation, based on the assigned code information supplied thereto. Butterfly computation steps determined to be unnecessary are prevented from being carried out.

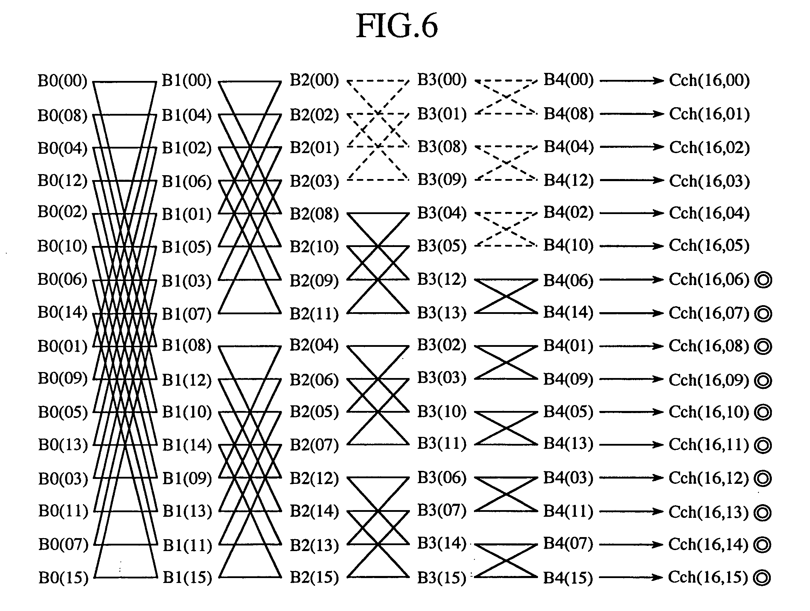

Fig. 6 shows a first example of computation performed in the butterfly computation circuit of Fig. 5. A multiplexed chip bit sequence corresponding to a symbol of a symbol bit sequence is indicated by {B0(k);k=00-15}. Each B0(k) corresponds to 1 chip bit. In the illustration, B0(k) is arranged to facilitate the understanding of the process of computation. k is assigned in the order of arrival of the multiplexed chip bit sequence received. The butterfly computation performed on the multiplexed chip bit sequence {B0(k);k=00-15} is divided into four stages. In a first stage, butterfly computation is performed on a multiplexed chip bit sequence. In a second stage, butterfly computation is performed on a bit sequence {B1(k);k=00-15} obtained as a result of butterfly computation of the first stage. In a third stage, butterfly computation is performed on a bit sequence {B2(k);k=00-15} obtained as a result of butterfly computation of the second stage. In a fourth stage, butterfly computation is performed on a bit sequence {B3(k);k=00-15} obtained as a result of butterfly computation of the third stage.

In the first stage, successive series of two bits constructing the multiplexed bit sequence {B0(k);k=00-15} are input to the butterfly computation circuit, starting at the head of the stream. The first butterfly computation of the first stage is a computation for obtaining

$$Out1=B0(00)+B0(01),Out2=B0(00)-B0(01)$$

from

$$In1=B0(00),In2=B0(01)$$

Thereafter, butterfly computation steps on a sequence

$$\{Inl,In2\}=\{B0(02),B0(03)\},\{B0(04),B0(05)\},\{B0(06),B 0(07)\},\{B0(08),B0(09)\},\{B0(10),B0(11)\},\{B0(12),B0(1$$

$$3)\},\{B0(14),B0(15)\}$$

are successively performed so as to obtain

$$\{Out1,Out2\}=\{B0(02)+B0(03),B0(02)-$$

$$B0(03)\},\{B0(04)+B0(05),B0(04) -$$

$$B0(05)\},\{B0(06)+B0(07),B0(06) -$$

$$B0(07)\},\{B0(08)+B0(09),B0(08) -$$

$$B0(09)\},\{B0(10)+B0(11),B0(10) -$$

$$B0(11)\},\{B0(12)+B0(13),B0(12) -$$

$$B0(13)\},\{B0(14)+B0(15),B0(14)-B0(15)\}$$

The results of computation in the first stage are processed such that a sequence Out1 successively output from the adder of the butterfly computation circuit form a sequence {B1(k);k=00-07} and a sequence Out2 successively output from the subtractor form a sequence {B1(k);k=08-15}. The sequence {B1(k);k=08-15} is defined as follows.

$$B1(00)=B0(00)+B0(01)$$

$$B1(01)=B0(02)+B0(03)$$

$$B1(02)=B0(04)+B0(05)$$

$$B1(03)=B0(06)+B0(07)$$

$$B1(04)=B0(08)+B0(09)$$

$$B1(05)=B0(10)+B0(11)$$

$$B1(06)=B0(12)+B0(13)$$

$$B1(07)=B0(14)+B0(15)$$

$$B1(08)=B0(00)-B0(01)$$

$$B1(09)=B0(02)-B0(03)$$

$$B1(10)=B0(04)-B0(05)$$

$$B1(11)=B0(06)-B0(07)$$

$$B1(12)=B0(08)-B0(09)$$

$$B1(13)=B0(10)-B0(11)$$

$$B1(14)=B0(12)-B0(13)$$

$$B1(15)=B0(14)-B0(15)$$

A sequence of results of computation {B1(k);k=00-07} from the adder is designated as a first group and a sequence of results {B1(k);k=08-15} is designated as a second group.

In the second stage, first and second computation steps are performed. In the first computation step, the first group of the results of computation in the first stage, i.e. the bit sequence {B1(k);k=00-07} is subject to butterfly computation. In the second computation step, the second group, i.e. the bit sequence {B1(k);k=08-15} is subject to butterfly computation. The results of computation in the second stage are processed such that a sequence Out1 successively output from the adder of the butterfly computation circuit related to the first computation step form a sequence {B2(k); k=00-03} (first group) and a sequence Out1 successively output from the adder of the butterfly computation circuit related to the second computation step form a sequence {B2(k);k=04-07} (second group). A sequence Out2 successively output from the subtractor of the butterfly computation circuit related to the first computation step form a sequence {B2(k);k=08-11} (third group) and a sequence Out2 successively output from the subtractor of the butterfly computation circuit related to the second computation step form a sequence {B2(k);k=12-15} (fourth group). The sequence {B2(k); k=00-15} is defined as follows.

$$B2(00)=B1(00)+B1(01)$$

$$B2(01)=B1(02)+B1(03)$$

$$B2(02)=B1(04)+B1(05)$$

$$B2(03)=B1(06)+B1(07)$$

$$B2(04)=B1(08)+B1(09)$$

$$B2(05)=B1(10)+B1(11)$$

$$B2(06)=B1(12)+B1(13)$$

$$B2(07)=B1(14)+B1(15)$$

$$B2(08)=B1(00)-B1(01)$$

$$B2(09)=B1(02)-B1(03)$$

$$B2(10)=B1(04)-B1(05)$$

$$B2(11)=B1(06)-B1(07)$$

$$B2(12)=B1(08)-B1(09)$$

$$B2(13)=B1(10)-B1(11)$$

$$B2(14)=B1(12)-B1(13)$$

$$B2(15)=B1(14)-B1(15)$$

In the third stage, first through fourth computation steps are performed. In the first computation step, the first group of the results of computation in the second stage, i.e. the bit sequence {B2(k);k=00-03} is subject to butterfly computation. In the second-computation step, the second group, i.e. the bit sequence {B2(k);k=04-07} is subject to butterfly computation. In the third computation step, the third group of the results of computation in the second stage, i.e. the bit sequence {B2(k);k=08-11} is subject to butterfly computation. In the fourth computation step, the fourth group, i.e. the bit sequence {B2(k);k=12-15} is subject to butterfly computation.

The results of computation in the third stage are processed such that a sequence Out1 successively output from the adder of the butterfly computation circuit related to the first computation step form a sequence {B3(00),B3(01)} (first group) and a sequence Out1 successively output from the adder of the butterfly computation circuit related to the second computation step form a sequence {B3(02),B3(03)} (second group). A sequence Out1 successively output from the adder of the butterfly computation circuit related to the third computation step form a sequence {B3(04),B3(05)} (third group) and a sequence Out1 successively output from the adder of the butterfly computation circuit related to the fourth computation step form a sequence {B3(06),B3(07)} (fourth group). A sequence Out2 successively output from the subtractor of the butterfly computation circuit related to the first computation step form a sequence {B3(08),B3(09)} (fifth group) and a sequence Out2 successively output from the subtractor of the butterfly computation circuit related to the second computation step form a sequence {B3(10),B3(11)} (sixth group). A sequence Out2 successively output from the subtractor of the butterfly computation circuit related to the third computation step form a sequence {B3(12),B3(13)} (seventh group) and a sequence Out2 successively output from the subtractor of the butterfly computation circuit related to the fourth computation step form a sequence {B3(14),B3(15)} (eighth group).

The sequence {B3(k);k=00-15} is defined as follows.

$$B3(00)=B2(00)+B2(01)$$

$$B3(01)=B2(02)+B2(03)$$

$$B3(02)=B2(04)+B2(05)$$

$$B3(03)=B2(06)+B2(07)$$

$$B3(04)=B2(08)+B2(09)$$

$$B3(05)=B2(10)+B2(11)$$

$$B3(06)=B2(12)+B2(13)$$

$$B3(07)=B2(14)+B2(15)$$

$$B3(08)=B2(00)-B2(01)$$

$$B3(09)=B2(02)-B2(03)$$

$$B3(10)=B2(04)-B2(05)$$

$$B3(11)=B2(06)-B2(07)$$

$$B3(12)=B2(08)-B2(09)$$

$$B3(13)=B2(10)-B2(11)$$

$$B3(14)=B2(12)-B2(13)$$

$$B3(15)=B2(14)-B2(15)$$

In the fourth stage, first through eighth computation steps are performed. In the first computation step, the first group of the results of computation in the third stage, i.e. the bit sequence {B3(00),B3(01)} is subject to butterfly computation.

In the second computation step, the second group, i.e. the bit sequence {B3(02),B3(03)} is subject to butterfly computation. In the third computation step, the third group, i.e. the bit sequence {B3(04),B3(05)} is subject to butterfly computation. In the fourth computation step, the fourth group, i.e. the bit sequence {B3(06),B3(07)} is subject to butterfly computation. In the fifth computation step, the fifth group, i.e. the bit sequence {B3(08),B3(09)} is subject to butterfly computation. In the sixth computation step, the sixth group, i.e. the bit sequence {B3(10),B3(11)} is subject to butterfly computation. In the seventh computation step, the seventh group, i.e. the bit sequence {B3(12),B3(13)} is subject to butterfly computation. In the eighth computation step, the eighth group, i.e. the bit sequence {B3(14),B3(15)} is subject to butterfly computation.

The results of computation in the fourth stage are processed such that a sequence Out1 successively output from the adder of the butterfly computation circuit related to the first computation step form a sequence B4(00) and a sequence Out1 successively output from the adder of the butterfly computation circuit related to the second computation step form a sequence B4(01). A sequence Out1 successively output from the adder of the butterfly computation circuit related to the third computation step form a sequence B4(02) and a sequence Out1 successively output from the adder of the butterfly computation circuit related to the fourth computation step form a sequence B4(03). A sequence Out1 successively output from the adder of the butterfly computation circuit related to the fifth computation step form a sequence B4(04) and a sequence Out1 successively output from the adder of the butterfly computation circuit related to the sixth computation step form a sequence B4(05). A sequence Out1 successively output from the adder of the butterfly computation circuit related to the seventh computation step form a sequence B4(06) and a sequence Out1 successively output from the adder of the butterfly computation circuit related to the eighth computation step form a sequence B4(07).

A sequence Out2 successively output from the subtractor of the butterfly computation circuit related to the first computation step form a sequence B4(08) and a sequence Out2 successively output from the subtractor of the butterfly computation circuit related to the second computation step form a sequence B4(9). A sequence Out2 successively output from the subtractor of the butterfly computation circuit related to the third computation step form a sequence B4(10) and a sequence Out2 successively output from the subtractor of the butterfly computation circuit related to the fourth computation step form a sequence B4(11). A sequence Out2 successively output from the subtractor of the butterfly computation circuit related to the fifth computation step form a sequence B4(12) and a sequence Out2 successively output from the subtractor of the butterfly computation circuit related to the sixth computation step form a sequence B4(13). A sequence Out2 successively output from the subtractor of the butterfly computation circuit related to the seventh computation step form a sequence B4(14) and a sequence Out2 successively output from the subtractor of the butterfly computation circuit related to the eighth computation step form a sequence B4(15).

The sequence {B4(k);k=00-15} is defined as follows.

$$B4(00)=B3(00)+B3(01)$$

$$B4(01)=B3(02)+B3(03)$$

$$B4(02)=B3(04)+B3(05)$$

$$B4(03)=B3(06)+B3(07)$$

$$B4(04)=B3(08)+B3(09)$$

$$B4(05)=B3(10)+B3(11)$$

$$B4(06)=B3(12)+B3(13)$$

$$B4(07)=B3(14)+B3(15)$$

$$B4(08)=B3(00)-B3(01)$$

$$B4(09)=B3(02)-B3(03)$$

$$B4(10)=B3(04)-B3(05)$$

$$B4(11)=B3(06)-B3(07)$$

$$B4(12)=B3(08)-B3(09)$$

$$B4(13)=B3(10)-B3(11)$$

$$B4(14)=B3(12)-B3(13)$$

$$B4(15)=B3(14)-B3(15)$$

In a final stage, as shown in Fig. 6, the sequence B4(00)-B4(15) are mapped into Cch(16,00)-Cch(16,15) so that symbols for respective channelization codes are retrieved. As obviously shown in Fig. 6, when the butterfly computation is exhaustively performed on the entirety of combinations, each of the first through fourth stages involves 8 steps of butterfly computation so that a total of 32 steps are performed.

A description will now be given of the butterfly computation in a case where the channelization codes Cch (16,00)-Cch(16,05) remain unassigned (control channels are unused), and the 10 codes Cch(16,06)-Cch(16,15) are assigned to packet channels. In this case, the butterfly computation steps executed to compute symbol bit sequences corresponding to Cch(16,00)-Cch(16,05), respectively, are not necessary. That is, the first computation step, the third computation step and the fifth computation step of the fourth stage for computing B4(00),B4(08),B4(04),B4(12),B4(02), B4(10) are not necessary. In addition, the results of computation B3(00),B3(01),B3(08),B3(09) in the third stage used in the aforementioned steps of computation are not necessary. That is, the first computation step of the third stage is not necessary. Referring to Fig. 6, those butterfly computation steps that are necessary are indicated by solid lines and unnecessary butterfly computation steps are indicated by broken lines. By omitting at least one of unnecessary steps of butter computation, the despreading process in the mobile terminal is reduced in scale. By omitting the entirety of unnecessary butterfly computation steps, i.e. by not performing two steps of butterfly computation in the third stage and three steps in the fourth stage, the despreading process in the mobile terminal is further reduced in scale.

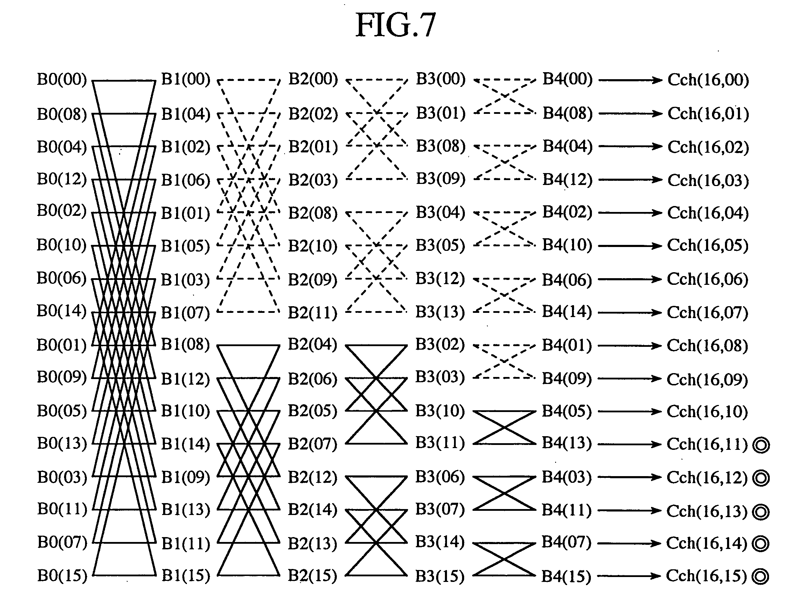

Fig. 7 shows a second example of computation performed in the butterfly computation circuit of Fig. 5. Fig. 7 shows that 5 codes Cch(16,11)-Cch(16,15) of the entirety of channelization codes Cch(16,k) are already assigned. In this case, butterfly computation steps executed to compute symbol bit sequences corresponding to Cch(16,00)-Cch (16,10) are not necessary. That is, the first computation step, the second computation step, the third computation step, the fifth computation step and the seventh computation step of the fourth stage for computing B4(00),B4(08),B4(04),B4(12),B4(02),B4(10),B4(06),B4 (14),B4(01),B4(09) are not necessary. In addition, the results of computation B3(00),B3(01),B3(08),B3(09),B3(04),B3(05),B3(12),B3 (13) in the third stage used in the aforementioned steps of computation are not necessary. That is, the first computation step and the third computation step of the third stage are not necessary. In addition, the results of computation B2(00),B2(02),B2(01),B2(03),B2(08),B2(10),B2(09),B2 (11) in the second stage used in the aforementioned steps of computation are not necessary. That is, the first computation step in the second stage is not necessary. Referring to Fig. 7, those butterfly computation steps that are necessary are indicated by solid lines and unnecessary butterfly computation-steps are indicated by broken lines. By omitting at least one of unnecessary steps of butter computation, the despreading process in the mobile terminal is reduced in scale. By omitting the entirety of unnecessary butterfly computation steps, i.e. by not performing four steps of butterfly computation in the second stage, four steps in the third stage and five steps in the fourth stage, the despreading process in the mobile terminal is further reduced in scale.

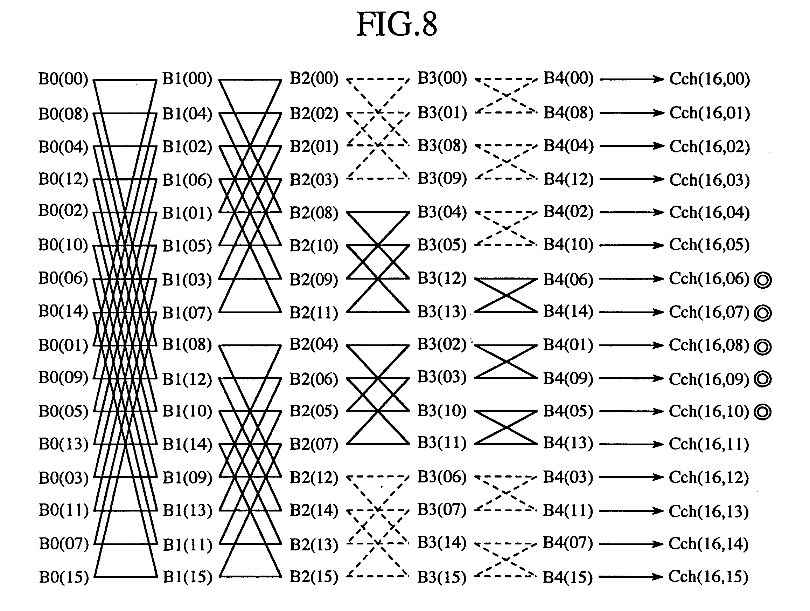

Fig. 8 shows a third example of computation performed in the butterfly computation circuit of Fig. 5. Fig. 8 shows that 5 codes Cch(16,06)-Cch(16,10) of the entirety of channelization codes Cch(16,k) are already assigned. In this case, butterfly computation steps executed to compute symbol bit sequences corresponding to Cch(16,00)-Cch (16,05),Cch(16,11)-Cch(16,05) are not necessary. That is, the first computation step, the third computation step, the fourth computation step, the fifth computation step and the eighth computation step of the fourth stage for computing B4(00),B4(08),B4(04),B4(12),B4(02),B4(10),B4(03),B4 (11),B4(07),B4(15) are not necessary. In addition, the results of computation B3(00),B3(01),B3(08),B3(09),B3(06),B3(07),B3(14),B3 (15) in the third stage used in the aforementioned steps of computation are not necessary. That is, the first computation step and the fourth computation step of the third stage are not necessary. Referring to Fig. 8, those butterfly computation steps that are necessary are indicated by solid lines and unnecessary butterfly computation steps are indicated by broken lines. By omitting at least one of unnecessary steps of butter computation, the despreading process in the mobile terminal is reduced in scale. By omitting the entirety of unnecessary butterfly computation steps, i.e. by not performing four steps of butterfly computation in the third stage and five steps in the fourth stage, the despreading process in the mobile terminal is further reduced in scale.

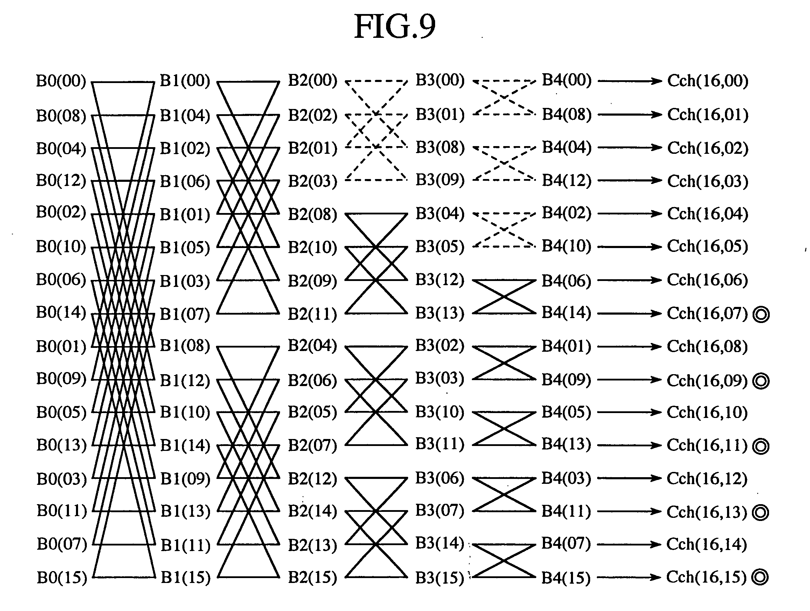

Fig. 9 shows a fourth example of computation performed in the butterfly computation circuit of Fig. 5. Fig. 9 shows that 5 codes Cch(16,07),Cch(16,09),Cch(16,11),Cch(16,13),Cch(16, 15) of the entirety of channelization codes Cch(16,k) are already assigned. In this case, butterfly computation steps executed to compute symbol bit sequences corresponding to Cch(16,00)-Cch(16,05),Cch(16,06),Cch(16,08),Cch(16,10),Cch(16, 12),Cch(16,14) are not necessary. That is, the first computation step, the third computation step and the fifth computation step of the fourth stage for computing B4(00),B4(08),B4(04),B4(12),B4(02),B4(10) are not necessary. In addition, the results of computation B3(00),B3(01),B3(08),B3(09) in the third stage used in the aforementioned steps of computation are not necessary. That is, the first computation step in the third stage is not necessary. Referring to Fig. 9, those butterfly computation steps that are necessary are indicated by solid lines and unnecessary butterfly computation steps are indicated by broken lines. By omitting at least one of unnecessary steps of butter computation, the despreading process in the mobile terminal is reduced in scale. By omitting the entirety of unnecessary butterfly computation steps, i.e. by not performing two steps of butterfly computation in the third stage and three steps in the fourth stage, the despreading process in the mobile terminal is further reduced in scale.

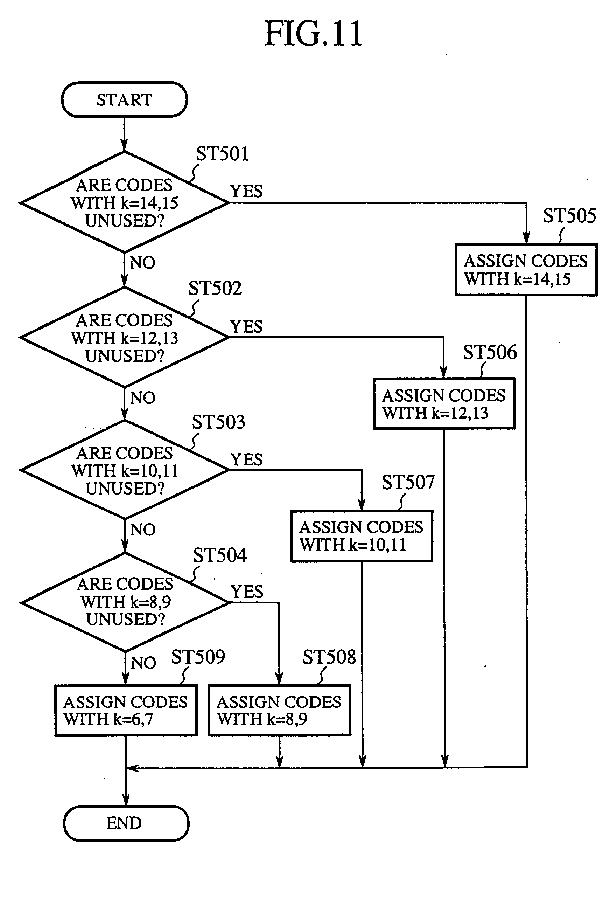

Fig. 10 is a flowchart showing a process of assigning codes in the base transceiver station of Fig. 1. It is assumed here that the number of codes assigned to a mobile terminal, i.e, the number of codes for a segment is 5, and that only one of a set of codes {Cch(16,k);k=06-10} or {Cch(16,k);k=11-15} is assignable. In step 201 of Fig. 10, a determination is made as to whether the codes {Cch(16,k);k=11-15} are unused. If an affirmative answer is yielded in step 201, control is turned to step 202 where the codes {Cch(16,k);k=11-15} are assigned to the mobile terminal. If a negative answer is yielded in step 201, control is turned to step 203 where the codes {Cch(16,k);k=06-10} are assigned to the mobile terminal.

Comparing the assignment shown in Fig. 8 where the codes {Cch(16,k);k=06-10} are assigned and the assignment shown in Fig. 7 where the codes {Cch(16,k);k=11-15} are assigned, the number of butterfly computation steps determined to be unnecessary in the latter assignment is larger than that of the former assignment, so that, as shown in Fig. 10, by giving priority to the assignment of the codes {Cch(16,k);k=11-15} the despreading process in the mobile terminal is reduced in scale.

The above-mentioned arrangement for code assignment is implemented by a simple computation and does not require a complex construction of the base transceiver station. Further, the mobile terminal only has to perform computation steps related to the assigned codes so that a complex construction is not required. Moreover, according to the flow of Fig. 10, notification from the base transceiver station to the mobile terminal, indicating which of the two code sets {Cch(16,k);k=06-10} and {Cch(16,k);k=11-15} is assigned to the mobile terminal, consumes only one bit. Accordingly, the volume of communication for signaling is prevented from being increased.

Second embodiment

(Primary Scrambling, 2-code segmentation)

Fig. 11 is a flowchart showing a procedure of code assignment according to a second embodiment of the present invention.

It is assumed that the number of codes assigned to a mobile terminal, i.e. the number of codes for a segment is 2. In step 501 of Fig. 11, a determination is made as to whether the codes {Cch(16,15),Cch(16,14)} are unused. If an affirmative answer is yielded in step 501, control is turned to step 505 where the codes {Cch(16,15),Cch(16,14)} are assigned to the mobile terminal. If a negative answer is yielded in step 501, control is turned to step 502. In step 502, a determination is made as to whether the codes {Cch(16,13),Cch(16,12)} are unused. If an affirmative answer is yielded in step 502, control is turned to step 506, where the codes {Cch(16,13),Cch(16,12)} are assigned to the mobile terminal. If a negative answer is yielded in step 502, control is turned to step 503.

In step 503, a determination is made as to whether the codes {Cch(16,11),Cch(16,10)} are unused. If an affirmative answer is yielded in step 503, control is turned to step 507 where the codes {Cch(16,11),Cch(16,10)} are assigned to the mobile terminal. If a negative answer is yielded in step 503, control is turned to step 504. In step 504, a determination is made as to whether the codes {Cch(16,09),Cch(16,08)} are unused. If an affirmative answer is yielded in step 504, control is turned to step 508 where the codes {Cch(16,09),Cch(16,08)} are assigned to the mobile terminal. If a negative answer is yielded in step 504, control is turned to step 509, where the codes {Cch(16,06),Cch(16,07)} are assigned to the mobile terminal.

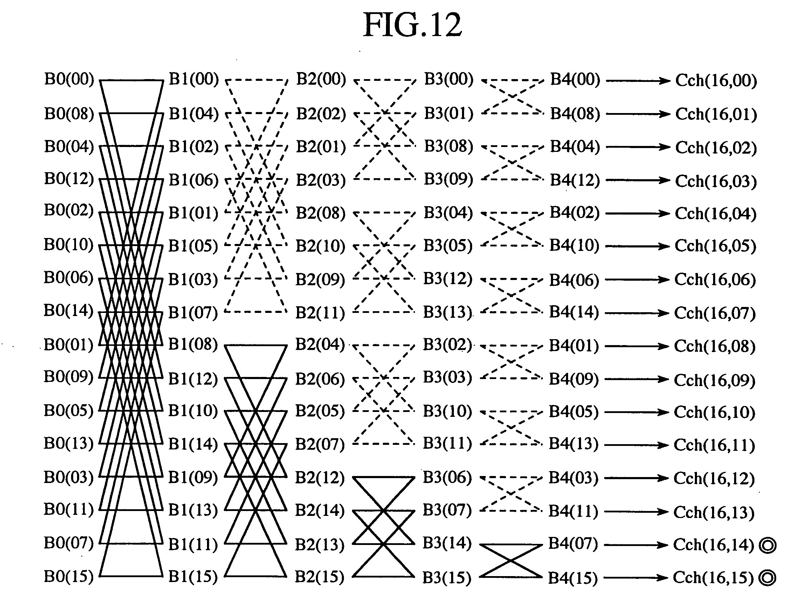

Fig. 12 shows the butterfly computation according to Fig. 2. Fig. 12 shows the computation performed when the channelization codes {Cch(16,15),Cch(16,14)} are already assigned. In this case, butterfly computation steps executed to compute symbol bit sequences corresponding to Cch(16,00)-Cch(16,13) are unnecessary. That is, the first through seventh computation steps of the fourth stage for computing B4(00),B4(08),B4(04),B4(12),B4(02),B4(10),B4(06),B4 (14),B4(01),B4(09),B4(05),B4(13),B4(03),B4(11) are not necessary. In addition, the results of computation B3(00),B3(01),B3(08),B3(09),B3(04),B3(05),B3(12),B3 (13),B3(02),B3(03),B3(10),B3(11) in the third stage used in the aforementioned steps of computation are not necessary. That is, the first through third computation steps in the third stage are not necessary. In addition, the results of computation B2(00),B2(02),B2(01),B2(03),B2(08),B2(10),B2(09),B2 (11) in the second stage used in the aforementioned steps of computation are not necessary. That is, the first computation step in the second stage is not necessary. Referring to Fig. 12, those butterfly computation steps that are necessary are indicated by solid lines and unnecessary butterfly computation steps are indicated by broken lines. By omitting at least one of unnecessary steps of butter computation, the despreading process in the mobile terminal is reduced in scale. By omitting the entirety of unnecessary butterfly computation steps, i.e. by not performing four steps of butterfly computation in the second stage, six steps in the third stage and seven steps in the fourth stage, the despreading process in the mobile terminal is further reduced in scale.

Third embodiment

(Primary Scrambling, SF=32)

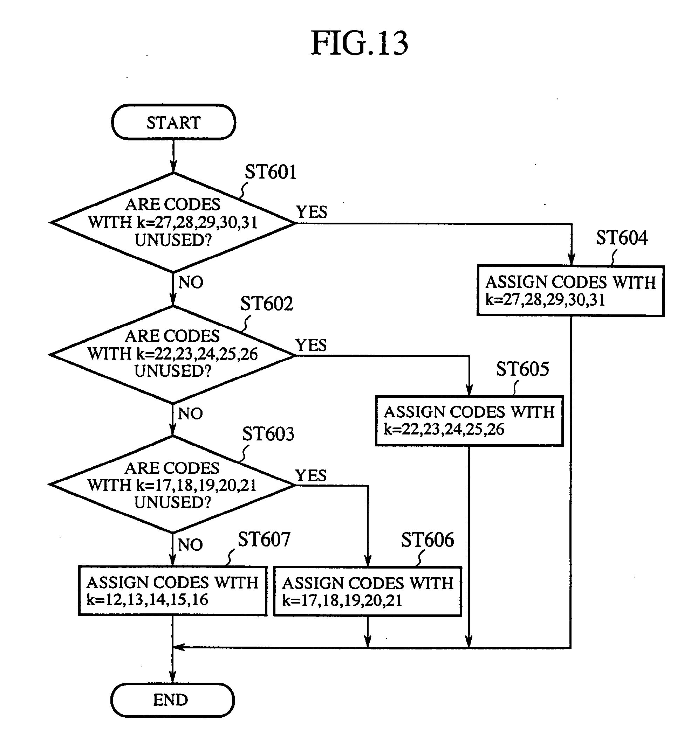

Fig. 13 is a flowchart showing a procedure for code assignment according to a third embodiment of the present invention.

It is assumed here that the spreading rate SF=32, and the number of codes in a segment is 5. In step 601 of Fig. 13, a determination is made as to whether the codes {Cch(32,k);k=27-31} are unused. If an affirmative answer is yielded in step 601, control is turned to step 604 where the codes {Cch(32,k);k=27-31} are assigned to the mobile terminal. If a negative answer is yielded in step 601, control is turned to step 602. In step 602, a determination is made as to whether the codes {Cch(32,k);k=22-26} are unused. If an affirmative answer is yielded in step 602, control is turned to step 605 where the codes {Cch(32,k);k=22-26} are assigned to the mobile terminal. If a negative answer is yielded in step 602, control is turned to step 603. In step 603, a determination is made as to whether the codes {Cch(32,k); k=17-21} are unused. If an affirmative answer is yielded in step 603, control is turned to step 606 where the codes {Cch(32,k);k=17-21} are assigned to the mobile terminal. If a negative answer is yielded in step 603, control is turned to step 607 where the codes {Cch(32,k);k=12-16} are assigned to the mobile terminal.

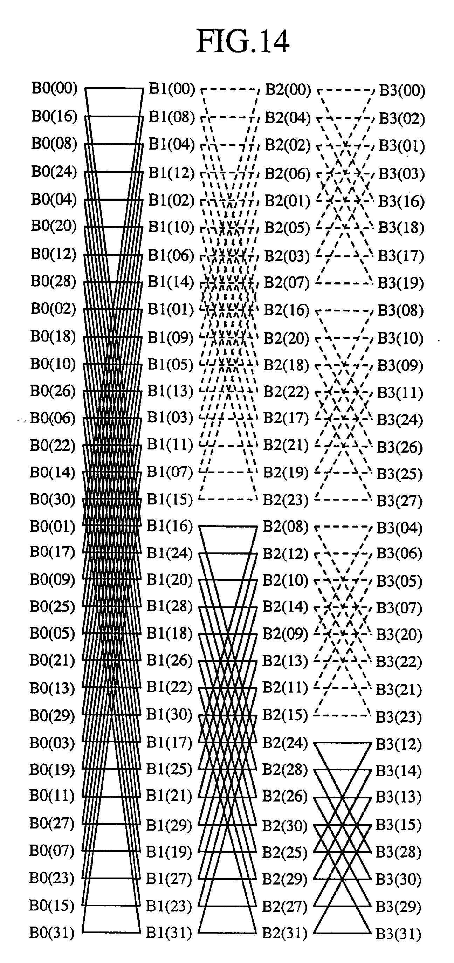

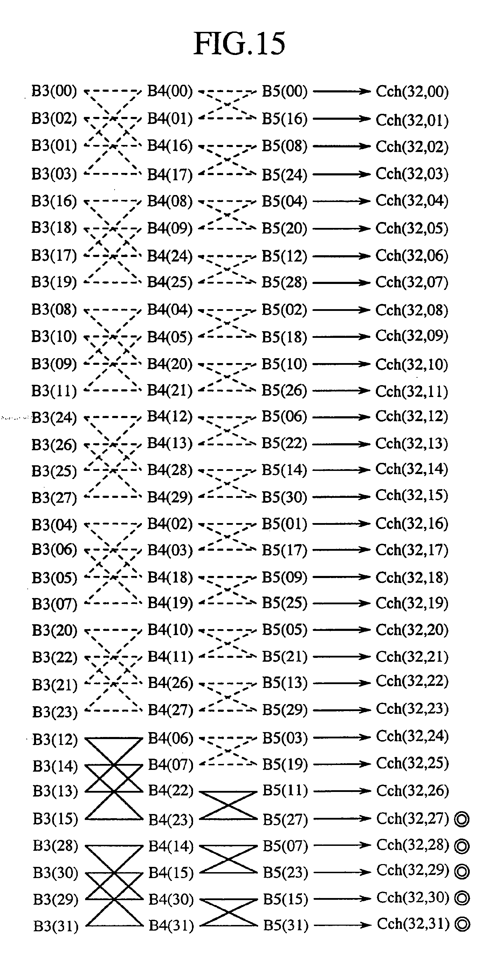

Fig. 14 and Fig. 15 show the butterfly computation according to the third embodiment. It is assumed here that SF=32 and the channelization codes {Cch(32,k);k=27-31} are already assigned. A multiplexed chip bit sequence corresponding to a symbol of a symbol bit sequence is indicated by {B0(k);k=00-31}.

A description will be given of the butterfly computation for computing symbols corresponding to the entirety of channelization codes, respectively.

Butterfly computation performed on the multiplexed chip bit sequence {B0(k);k=00-31} is divided into first through fifth stages. In a first stage, butterfly computation is performed on a multiplexed chip bit sequence. In a second stage, butterfly computation is performed on a bit sequence {B1(k);k=00-31} obtained as a result of butterfly computation of the first stage. In a third stage, butterfly computation is performed on a bit sequence {B2(k);k=00-31} obtained as a result of butterfly computation of the second stage. In a fourth stage, butterfly computation is performed on a bit sequence {B2(k);k=00-31} obtained as a result of butterfly computation of the third stage. In a fifth stage, butterfly computation is performed on a bit sequence {B4(k);k=00-31} obtained as a result of butterfly computation of the fourth stage.

In the first stage, successive series of two bits constructing the multiplexed chip bit sequence {B0(k);k=00-31} are input to the butterfly computation circuit, starting at the head of the sequence. The first butterfly computation step of the first stage is a computation for obtaining

$$Out1=B0(00)+B0(01),Out2=B0(00)-B0(01)$$

from

$$In1=B0(00),In2=B0(01)$$

Thereafter, butterfly computation steps on a sequence

$\{Inl,In2\}=\{B0(02),B0(03)\},\{B0(04),B0(05)\},\{B0(06),B\ 0(07)\},\{B0(08),B0(09)\},\{B0(10),B0(11)\},\{B0(12),B0(13)\},\{B0(14),B0(15)\},\{B0(16),B0(17)\},\{B0(18),B0(19)\},\ \{B0(20),B0(21)\},\{B0(22),B0(23)\},\{B0(24),B0(25)\},\{B0(26),B0(27)\},\{B0(28),B0(29)\},\{B0(30),B0(31)\}$

are successively performed so as to obtain

$$\{Out1,Out2\}=\{B0(02)+B0(03),B0(02)-B0(03)\},\{B0(04)+B0(05),B0(04)-B0(05)\},\{B0(06)+B0(07),B0(06)-B0(07)\},\{B0(08)+B0(09),B0(08)-B0(09)\},\{B0(10)+B0(11),B0(10)-B0(11)\},\{B0(12)+B0(13),B0(12)-B0(13)\},\{B0(14)+B0(15),B0(14)-B0(15)\},\{B0(16)+B0(17),B0(16)-B0(17)\},\{B0(18)+B0(19),B0(18)-B0(19)\},\{B0(20)+B0(21),B0(20)-B0(21)\},\{B0(22)+B0(23),B0(22)-B0(23)\},\{B0(24)+B0(25),B0(24)-B0(25)\},\{B0(26)+B0(27),B0(26)-B0(27)\},\{B0(28)+B0(29),B0(28)-B0(29)\},\{B0(30)+B0(31),B0(30)-B0(31)\}$$

The results of computation in the first stage are processed such that a sequence Out1 successively output from the adder of the butterfly computation circuit form a sequence {B1(k);k=00-15} and a sequence Out2 successively output from the subtractor form a sequence {B1(k);k=15-31}. The sequence {B1(k);k=00-31} is defined as follows.

$$B1(00)=B0(00)+B0(01)$$

$$B1(01)=B0(02)+B0(03)$$

$$B1(02)=B0(04)+B0(05)$$

$$B1(03)=B0(06)+B0(07)$$

$$B1(04)=B0(08)+B0(09)$$

$$B1(05)=B0(10)+B0(11)$$

$$B1(06)=B0(12)+B0(13)$$

$$B1(07)=B0(14)+B0(15)$$

$$B1(08)=B0(16)+B0(17)$$

$$B1(09)=B0(18)+B0(19)$$

$$B1(10)=B0(20)+B0(21)$$

$$B1(11)=B0(22)+B0(23)$$

$$B1(12)=B0(24)+B0(25)$$

$$B1(13)=B0(26)+B0(27)$$

$$B1(14)=B0(28)+B0(29)$$

$$B1(15)=B0(30)+B0(31)$$

$$B1(16)=B0(00)-B0(01)$$

$$B1(17)=B0(02)-B0(03)$$

$$B1(18)=B0(04)-B0(05)$$

$$B1(19)=B0(06)-B0(07)$$

$$B1(20)=B0(08)-B0(09)$$

$$B1(21)=B0(10)-B0(11)$$

$$B1(22)=B0(12)-B0(13)$$

$$B1(23)=B0(14)-B0(15)$$

$$B1(08)=B0(16)-B0(17)$$

$$B1(09)=B0(18)-B0(19)$$

$$B1(10)=B0(20)-B0(21)$$

$$B1(11)=B0(22)-B0(23)$$

$$B1(12)=B0(24)-B0(25)$$

$$B1(13)=B0(26)-B0(27)$$

$$B1(14)=B0(28)-B0(29)$$

$$B1(15)=B0(30)-B0(31)$$

A generic expression below, where n=1, 2, 3, 4, 5, and m=n-1, may be used to represent Bn(k) including B1(k).

$$Bn(00)=Bm(00)+Bm(01)$$

$$Bn(01)=Bm(02)+Bm(03)$$

$$Bn(02)=Bm(04)+Bm(05)$$

$$Bn(03)=Bm(06)+Bm(07)$$

$$Bn(04)=Bm(08)+Bm(09)$$

$$Bn(05)=Bm(10)+Bm(11)$$

$$Bn(06)=Bm(12)+Bm(13)$$

Bn(07)=Bm(14)+Bm(15)

Bn(08)=Bm(16)+Bm(17)

Bn(09)=Bm(18)+Bm(19)

Bn(10)=Bm(20)+Bm(21)

Bn(11)=Bm(22)+Bm(23)

Bn(12)=Bm(24)+Bm(25)

Bn(13)=Bm(26)+Bm(27)

Bn(14)=Bm(28)+Bm(29)

Bn(15)=Bm(30)+Bm(31)

Bn(16)=Bm(00)-Bm(01)

Bn(17)=Bm(02)-Bm(03)

Bn(18)=Bm(04)-Bm(05)

Bn(19)=Bm(06)-Bm(07)

Bn(20)=Bm(08)-Bm(09)

Bn(21)=Bm(10)-Bm(11)

Bn(22)=Bm(12)-Bm(13)

Bn(23)=Bm(14)-Bm(15)

Bn(08)=Bm(16)-Bm(17)

Bn(09)=Bm(18)-Bm(19)

$$Bn(10)=Bm(20)-Bm(21)$$

$$Bn(11)=Bm(22)-Bm(23)$$

$$Bn(12)=Bm(24)-Bm(25)$$

$$Bn(13)=Bm(26)-Bm(27)$$

$$Bn(14)=Bm(28)-Bm(29)$$

$$Bn(15)=Bm(30)-Bm(31)$$

A sequence of results of computation {B1(k);k=00-15} from the adder is designated as a first group and a sequence of results {B1(k);k=16-31} is designated as a second group.

In the second stage, first and second computation steps are performed. In the first computation step, the first group of the results of computation in the first stage, i.e. the bit sequence {B1(k);k=00-15} is subject to butterfly computation. In the second computation step, the second group, i.e. the bit sequence {B1(k);k=16-31} is subject to butterfly computation.

The results of computation in the second stage are processed such that a sequence Out1 successively output from the adder of the butterfly computation circuit related to the first computation step form a sequence {B2(k);k=00-07} (first group) and a sequence Out1 successively output from the adder of the butterfly computation circuit related to the second computation step form a sequence {B2(k);k=08-15} (second group). A sequence Out2 successively output from the subtractor of the butterfly computation circuit related to the first computation step form a sequence {B2(k); k=16-23} (third group) and a sequence Out2 successively output from the subtractor of the butterfly computation circuit related to the second computation step form a sequence {B2(k);k=24-31} (fourth group).

In the third stage, first through fourth computation steps are performed. In the first computation step, the first group of the results of computation in the second stage, i.e. the bit sequence {B2(k);k=00-07} is subject to butterfly computation. In the second computation step, the second group, i.e. the bit sequence {B2(k);k=08-15} is subject to butterfly computation. In the third computation step, the third group, i.e. the bit sequence {B2(k);k=16-23} is subject to butterfly computation. In the fourth computation step, the fourth group, i.e. the bit sequence {B2(k);k=24-31} is subject to butterfly computation.

The results of computation in the third stage are processed such that a sequence Out1 successively output from the adder of the butterfly computation circuit related to the first computation step form a sequence {B3(k);k=00-03} (first group) and a sequence Out1 successively output from the adder of the butterfly computation circuit related to the second computation step form a sequence {B3(k);k=04-07} (second group). A sequence Out1 successively output from the adder of the butterfly computation circuit related to the third computation step form a sequence {B3(k);k=08-11} (third group) and a sequence Out1 successively output from the adder of the butterfly computation circuit related to the fourth computation step form a sequence {B3(k);k=12-15} (fourth group). A sequence Out2 successively output from the subtractor of the butterfly computation circuit related to the first computation step form a sequence {B3(k); k=16-19} (fifth group) and a sequence Out2 successively output from the subtractor of the butterfly computation circuit related to the second computation step form a sequence {B3(k);k=20-23} (sixth group). A sequence Out2 successively output from the subtractor of the butterfly computation circuit related to the third computation step form a sequence {B3(k);k=24-27} (seventh group) and a sequence Out2 successively output from the subtractor of the butterfly computation circuit related to the fourth computation step form a sequence {B3(k);k=28-31} (eighth group).

In the fourth stage, first through eighth computation steps are performed. In the first computation step, the first group of the results of computation in the third stage, i.e. the bit sequence {B3(k);k=00-03} is subject to butterfly computation. In the second computation step, the second group, i.e. the bit sequence {B3(k);k=04-07} is subject to butterfly computation. In the third computation step, the third group, i.e. the bit sequence {B3(k);k=08-11} is subject to butterfly computation. In the fourth computation step, the fourth group, i.e. the bit sequence {B3(k);k=12-15} is subject to butterfly computation. In the fifth computation step, the fifth group, i.e. the bit sequence {B3(k);k=16-19} is subject to butterfly computation. In the sixth computation step, the sixth group, i.e. the bit sequence {B3(k);k=20-23} is subject to butterfly computation. In the seventh computation step, the seventh group, i.e. the bit sequence {B3(k);k=24-27} is subject to butterfly computation. In the eighth computation step, the eighth group, i.e. the bit sequence {B3(k);k=28-31} is subject to butterfly computation.

The results of computation in the fourth stage are processed such that a sequence Out1 successively output from the adder of the butterfly computation circuit related to the first computation step form a sequence {B4(00),B4(01)} (first group) and a sequence Out1 successively output from the adder of the butterfly computation circuit related to the second computation step form a sequence {B4(02),B4(03)} (second group). A sequence Out1 successively output from the adder of the butterfly computation circuit related to the third computation step form a sequence {B4(04),B4(05)} (third group) and a sequence Out1 successively output from the adder of the butterfly computation circuit related to the fourth computation step form a sequence {B4(06),B4(07)} (fourth group). A sequence Out1 successively output from the adder of the butterfly computation circuit related to the fifth computation step form a sequence {B4(08),B4(09)} (fifth group) and a sequence Out1 successively output from the adder of the butterfly computation circuit related to the sixth computation step form a sequence {B4(10),B4(11)} (sixth group). A sequence Out1 successively output from the adder of the butterfly computation circuit related to the seventh computation step form a sequence {B4(12),B4(13)} (seventh group) and a sequence Out1 successively output from the adder of the butterfly computation circuit related to the eighth computation step form a sequence {B4(14),B4(15)} (eighth group). A sequence Out2 successively output from the subtractor of the butterfly computation circuit related to the first computation step form a sequence {B4(16),B4(17)} (ninth group) and a sequence Out2 successively output from the subtractor of the butterfly computation circuit related to the second computation step form a sequence {B4(18),B4(19)} (tenth group). A sequence Out2 successively output from the subtractor of the butterfly computation circuit related to the third computation step form a sequence {B4(20),B4(21)} (eleventh group) and a sequence Out2 successively output from the subtractor of the butterfly computation circuit related to the fourth computation step form a sequence {B4(22),B4(23)} (twelfth group). A sequence Out2 successively output from the subtractor of the butterfly computation circuit related to the fifth computation step form a sequence {B4(24),B4(25)} (thirteenth group) and a sequence Out2 successively output from the subtractor of the butterfly computation circuit related to the sixth computation step form a sequence {B4(26),B4(27)} (fourteenth group). A sequence Out2 successively output from the subtractor of the butterfly computation circuit related to the seventh computation step form a sequence {B4(28),B4(29)} (fifteenth group) and a sequence Out2 successively output from the subtractor of the butterfly computation circuit related to the eighth computation step form a sequence {B4(30),B4(31)} (sixteenth group).

In the fifth stage, first through sixteenth computation steps are performed. The first through sixteenth computation steps are butterfly computation steps performed on the first through sixteenth group of the results of computation in the fourth stage.

The results of computation in the fifth stage are processed such that a sequence Out1 successively output from the adder of the butterfly computation circuit related to the first computation step form a sequence B5(00), and a sequence Out1 successively output from the adder of the butterfly computation circuit related to the second computation step form a sequence B5(01). A sequence Out1 successively output from the adder of the butterfly computation circuit related to the third computation step form a sequence B5(02) and a sequence Out1 successively output from the adder of the butterfly computation circuit related to the fourth computation step form a sequence B5(03). A sequence Out1 successively output from the adder of the butterfly computation circuit related to the fifth computation step form a sequence B5(04) and a sequence Out1 successively output from the adder of the butterfly computation circuit related to the sixth computation step form a sequence B5(05). A sequence Out1 successively output from the adder of the butterfly computation circuit related to the seventh computation step form a sequence B5(06) and a sequence Out1 successively output from the adder of the butterfly computation circuit related to the eighth computation step form a sequence B5(07). A sequence Out1 successively output from the adder of the butterfly computation circuit related to the ninth computation step form a sequence B5(08) and a sequence Out1 successively output from the adder of the butterfly computation circuit related to the tenth computation step form a sequence B5(09). A sequence Out1 successively output from the adder of the butterfly computation circuit related to the eleventh computation step form a sequence B5(10) and a sequence Out1 successively output from the adder of the butterfly computation circuit related to the twelfth computation step form a sequence B5(11). A sequence Out1 successively output from the adder of the butterfly computation circuit related to the thirteenth computation step form a sequence B5(12) and a sequence Out1 successively output from the adder of the butterfly computation circuit related to the fourteenth computation step form a sequence B5(13). A sequence Out1 successively output from the adder of the butterfly computation circuit related to the fifteenth computation step form a sequence B5(14) and a sequence Out1 successively output from the adder of the butterfly computation circuit related to the sixteenth computation step form a sequence B5(15). A sequence Out2 successively output from the subtractor of the butterfly computation circuit related to the first computation step form a sequence B5(16), and a sequence Out2 successively output from the subtractor of the butterfly computation circuit related to the second computation step form a sequence B5(17). A sequence Out2 successively output from the subtractor of the butterfly computation circuit related to the third computation step form a sequence B5(18) and a sequence Out2 successively output from the subtractor of the butterfly computation circuit related to the fourth computation step form a sequence B5(19). A sequence Out2 successively output from the subtractor of the butterfly computation circuit related to the fifth computation step form a sequence B5(20) and a sequence Out2 successively output from the subtractor of the butterfly computation circuit related to the sixth computation step form a sequence B5(21). A sequence Out2 successively output from the subtractor of the butterfly computation circuit related to the seventh computation step form a sequence B5(22) and a sequence Out2 successively output from the subtractor of the butterfly computation circuit related to the eighth computation step form a sequence B5(23). A sequence Out2 successively output from the subtractor of the butterfly computation circuit related to the ninth computation step form a sequence B5(24) and a sequence Out2 successively output from the subtractor of the butterfly computation circuit related to the tenth computation step form a sequence B5(25). A sequence Out2 successively output from the subtractor of the butterfly computation circuit related to the eleventh computation step form a sequence B5(26) and a sequence Out2 successively output from the subtractor of the butterfly computation circuit related to the twelfth computation step form a sequence B5(27). A sequence Out2 successively output from the subtractor of the butterfly computation circuit related to the thirteenth computation step form a sequence B5(28) and a sequence Out2 successively output from the subtractor of the butterfly computation circuit related to the fourteenth computation step form a sequence B5(29). A sequence Out2 successively output from the subtractor of the butterfly computation circuit related to the fifteenth computation step form a sequence B5(30) and a sequence Out2 successively output from the subtractor of the butterfly computation circuit related to the sixteenth computation step form a sequence B5(31).

In a final stage, as shown in Fig. 15, the sequence B5(00)-B5(31) are mapped into Cch(16,00)-Cch(16,31) so that symbols for respective channelization codes are retrieved. As obviously shown in Figs. 14 and 15, when the butterfly computation is exhaustively performed on the entirety of combinations, each of the first through fifth stages involves 16 steps of butterfly computation so that a total of 80 steps are performed.

A description will now be given of the butterfly computation in a case where the channelization codes Cch (16,00)-Cch(16,26) remain unassigned, and the 10 codes Cch(16,06)-Cch(16,15) are assigned to packet channels. In this case, the butterfly computation steps executed to compute symbol bit sequences corresponding to Cch(16,00) -Cch(16,26), respectively, are not necessary. That is, the first through seventh computation steps, the ninth through eleventh computation steps, the thirteenth through fifteenth computation steps of the fifth stage, the first through third computation steps, the fifth through seventh computation steps of the fourth stage, the first through third computation steps of the third stage, and the first computation step of the second stage are unnecessary. By omitting at least one of unnecessary steps of butter computation, the despreading process in the mobile terminal is reduced in scale. By omitting the entirety of unnecessary butterfly computation steps, i.e. by not performing eight steps of butterfly computation in the second stage, twelve steps in the third stage, twelve steps in the fourth stage and thirteen steps in the fifth stage, the despreading process in the mobile terminal is further reduced in scale.

Fourth embodiment

(Secondary scrambling, 5-code segmentation)

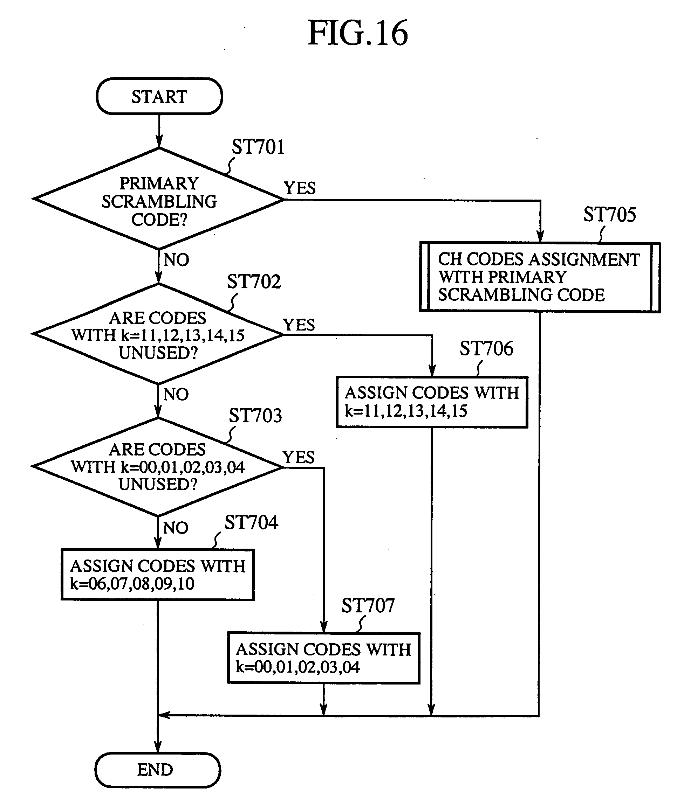

Fig. 16 is a flowchart showing a procedure for code assignment according to a fourth embodiment of the present invention. The fourth embodiment is also adapted for the secondary scrambling code. It is assumed that the spreading factor SF=16, and the number of codes for a segment is 5. In step 701 of Fig. 16, a determination is made as to whether the primary scrambling code is used. If an affirmative answer is yielded in step 701, control is turned to step 705 where channelization code assignment adapted for the primary scrambling code (for example, the channelization code assignment of Fig. 10) is performed. If a negative answer is yielded in step 701, control is turned to step 702. In step 702, a determination is made as to whether the codes {Cch(16,k);k=11~15} are unused. If an affirmative answer is yielded in step 702, control is turned to step 706 where the codes {Cch(16,k);k=11~15} are assigned to the mobile terminal. If a negative answer is yielded in step 702, control is turned to step 703. In step 703, a determination is made as to whether the codes {Cch(16,k);k=00~04} are unused. If an affirmative answer is yielded in step 703, control is turned to step 707 where the codes {Cch(16,k);k=00~04} are assigned to the mobile terminal. If a negative answer is yielded in step 703, control is turned to step 704 where the codes {Cch(16,k);k=06~10} are assigned to the mobile terminal.

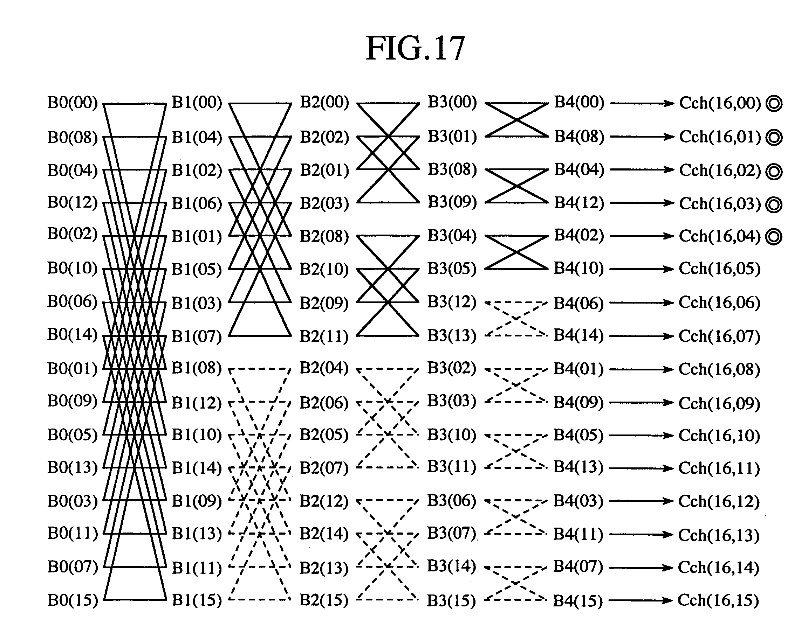

Fig. 17 shows butterfly computation according to the fourth embodiment.. Fig. 17 shows that the 5 codes Cch (16,00)~Cch(16,04) of the entire channelization codes Cch(16,k) are already assigned. In this case, butterfly computation steps executed to compute symbol bit sequences corresponding to Cch(16,05)-Cch(16,15) are unnecessary. That is, the second computation step, the fourth computation step, the sixth computation step, the seventh computation step and the eighth computation step of the fourth stage for computing B4(06),B4(14),B4(01),B4(09),B4(05),B4(13), B4(03),B4 (11),B4(07),B4(15) are not necessary. In addition, the results of computation B3(02),B3(03),B3(10),B3(11),B3(06),B3(07),B3(14),B3 (15) in the third stage used in the aforementioned steps of computation are not necessary. That is, the second computation step and the fourth computation step of the third stage are not necessary. In addition, the results of computation B2(04),B2(06),B2(05),B2(07),B2(12),B2(14),B2(13),B2 (15) in the third stage used in the aforementioned steps of computation are not necessary. That is, the second computation step of the second stage are not necessary. Referring to Fig. 12, those butterfly computation steps that are necessary are indicated by solid lines and unnecessary butterfly computation steps are indicated by broken lines.

By omitting at least one of unnecessary steps of butter computation, the despreading process in the mobile terminal is reduced in scale. By omitting the entirety of unnecessary butterfly computation steps, i.e. by not performing four steps of butterfly computation in the second stage, four steps in the third stage and five steps in the fourth stage, the despreading process in the mobile terminal is further reduced in scale. Moreover, notification from the base transceiver station to the mobile terminal, indicating which of the three code sets {Cch(16,k);k=00-04}, {Cch(16,k);k=06-10} or {Cch(16,k);k=11-15} is assigned to the mobile terminal, consumes only two bits. Accordingly, the volume of communication for signaling is prevented from being increased.

Fifth embodiment

(Assignment of Walsh codes)

In the first through fourth embodiments, a description is given of the use of channelization codes defined in the method described in 3GPP TS25.213V3.6.0(2001-06). In this embodiment, a description will be given of the use of channelization codes defined by a Walsh sequence. A Walsh sequence is known as a sequence defined by column vectors of Hadamard matrixes.
A Hadamard matrix H(n) is defined as follows.
H(0)=+1

$$Hk = \begin{pmatrix} Hk-1 & Hk-1 \\ Hk-1 & -Hk-1 \end{pmatrix}$$

(n=1,2,...)
Accordingly, a Walsh sequence for SF=16 is given by:

W(16,00)={+1,+1,+1,+1,+1,+1,+1,+1,+1,+1,+1,+1,+1, +1,+1}

W(16,01)={+1,-1,+1,-1,+1,-1,+1,-1,+1,-1,+1,-1,+1, - 1,+1,-1},

W(16,02)={+1,+1,-1,-1,+1,+1,-1,-1,+1,+1,-1, - 1,+1,+1,-1,-1}

W(16,03)={+1,-1,-1,+1,+1,-1,-1,+1,+1,-1,-1,+1,+1, - 1,-1,+1}

W(16,04)={+1,+1,+1,+1,-1,-1,-1,-1,+1,+1,+1,+1,-1, - 1,-1,-1}

W(16,05)={+1,-1,+1,-1,-1,+1,-1,+1,+1,-1,+1,-1, - 1,+1,-1,+1}

W(16,06)={+1,+1,-1,-1,-1,-1,+1,+1,+1,+1,-1,-1,-1, - 1,+1,+1}

W(16,07)={+1,-1,-1,+1,-1,+1,+1,-1,+1,-1,-1,+1, - 1,+1,+1,-1}

W(16,08)={+1,+1,+1,+1,+1,+1,+1,+1,-1,-1,-1,-1,-1, - 1,-1,-1}

W(16,09)={+1,-1,+1,-1,+1,-1,+1,-1,-1,+1,-1,+1, - 1,+1,-1,+1}

W(16,10)={+1,+1,-1,-1,+1,+1,-1,-1,-1,-1,+1,+1,-1, - 1,+1,+1}

W(16,11)={+1,-1,-1,+1,+1,-1,-1,+1,-1,+1,+1,-1, - 1,+1,+1,-1}

W(16,12)={+1,+1,+1,+1,-1,-1,-1,-1,-1,-1,-1, - 1,+1,+1,+1,+1}

W(16,13)={+1,-1,+1,-1,-1,+1,-1,+1,-1,+1,-1,+1,+1, - 1,+1,-1}

W(16,14)={+1,+1,-1,-1,-1,-1,+1,+1,-1, - 1,+1,+1,+1,+1,-1,-1}

W(16,15)={+1,-1,-1,+1,-1,+1,+1,+1,-1,-1,+1,+1,-1,+1, - 1,-1,+1}

The relationship between the codes Cch(SF,k) defined in the first embodiment and the Walsh sequence W(SF,k) is given as follows.

W(16,00)=Cch(16,00)

W(16,01)=Cch(16,08)

W(16,02)=Cch(16,04)

W(16,03)=Cch(16,12)

W(16,04)=Cch(16,02)

W(16,05)=Cch(16,10)

W(16,06)=Cch(16,06)

W(16,07)=Cch(16,14)

W(16,08)=Cch(16,01)

W(16,09)=Cch(16,09)

W(16,10)=Cch(16,05)

$$W(16,10)=Cch(16,13)$$

$$W(16,12)=Cch(16,03)$$

$$W(16,13)=Cch(16,11)$$

$$W(16,14)=Cch(16,07)$$

$$W(16,15)=Cch(16,15)$$

The construction according to the fifth embodiment is similar to the construction of Figs. 1 through 4 according to the first through fourth embodiments, a difference being that W(SF,k) is used instead of Cch(SF,k).

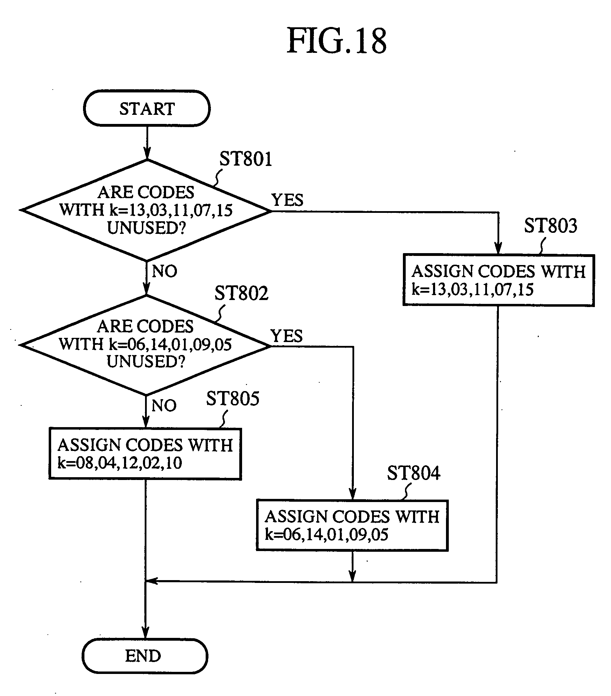

Fig. 18 is a flowchart showing a procedure for code assignment according to the fifth embodiment. It is assumed that the spreading factor SF=16, and the number of codes for a segment is 5. In step 801 of Fig. 18, a determination is made as to whether the codes {W(SF,k);k=13,03,11,07,15} are unused. If an affirmative answer is yielded in step 801, control is turned to step 803 where the codes {W(SF,k);k=13,03,11,07,15} are assigned to the mobile terminal. If a negative answer is yielded in step 801, control is turned to step 802. In step 802, a determination is made as as to whether the codes {W(SF,k);k=06,14,01,09,05} are unused. If an affirmative answer is yielded in step 802, control is turned to step 804 where the codes {W(SF,k);k=06,14,01,09,05} are assigned to the mobile terminal. If a negative answer is yielded in step 802, control is turned to step 805 where the codes {W(SF,k);k=08,04,02,09,10} are assigned to the mobile terminal.

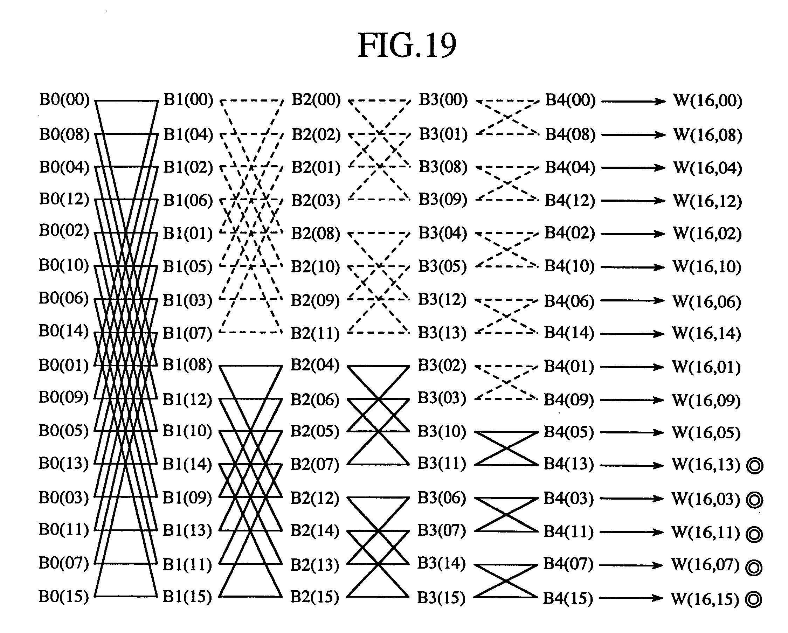

Fig. 19 shows butterfly computation according to the fifth embodiment. Fig. 19 shows that the Walsh sequence {W(SF,k);k=13,03,11,07,15} are assigned to the mobile terminal as channelization codes. The procedure of computation is the same as that described with reference to Fig. 7, a difference being that the correspondence between the final results of computation B4(00)-B4(15) and the codes W(16,00)-W(16,15) is different from that of Fig. 7.

In a similar configuration as the procedure of Fig. 7, the first computation step, the second computation step, the third computation step, the fifth computation step and the seventh computation step are unnecessary. The first computation step and the third computation step of the third stage are unnecessary. The first computation step of the second stage is unnecessary. By omitting at least one of unnecessary steps of butter computation, the despreading process in the mobile terminal is reduced in scale. By omitting the entirety of unnecessary butterfly computation steps, i.e. by not performing four steps of butterfly computation in the second stage, four steps in the third stage and five steps in the fourth stage, the despreading process in the mobile terminal is further reduced in scale. Moreover, notification from the base transceiver station to the mobile terminal, indicating which of the three code sets {W(16,k); k=08,04,12,10}, {W(16,k);k=06,14,01,09,05} or {W(16,k);k=13,03,11,07,05} is assigned to the mobile terminal, consumes only two bits. Accordingly, the volume of communication for signaling is prevented from being increased.

The present invention is not limited to the above-described embodiments, and variations and modifications may be made without departing from the scope of the present invention.

**Claims**

1.  A despreading method capable of retrieving a plurality of chip bit sequences by subjecting to repeated butterfly computation steps a multiplexed chip bit sequence produced by spreading symbol bit sequences, **characterized by** comprising the steps of:

    preventing at least one of the butterfly computation steps other than those steps necessary to retrieve those of the plurality of chip bit sequences corresponding to respective spreading codes from being carried out.

2.  The despreading method according to claim 1, **characterized in that** the entirety of butterfly computation steps other than those steps necessary to retrieve those of the chip bit sequences corresponding to the respective spreading codes are prevented from being carried out.

3. A mobile terminal for wireless communication with a base transceiver station **characterized by** comprising:

despreading means (313, 322) retrieving a plurality of chip bit sequences by subjecting to repeated butterfly computation steps a multiplexed chip bit sequence produced by spreading symbol bit sequences; and omitting means (322) preventing at least one of the butterfly computation steps other than those steps necessary to retrieve those of the chip bit sequences corresponding to respective spreading codes assigned to the mobile terminal from being carried out.

4. The mobile terminal according to claim 3, **characterized in that** said despreading means determines butterfly computation steps prevented from being carried out, based on the spreading codes assigned to the mobile terminal and reported from the base transceiver station.

5. A base transceiver station for wireless communication with a mobile terminal which is capable of retrieving a plurality of chip bit sequences by subjecting to repeated butterfly computation steps a multiplexed chip bit sequence, **characterized by** comprising:

spreading means (306, 307) spreading symbol bit sequences so as to produce the plurality of chip bit sequences;
multiplexing means (312) producing the multiplexed chip bit sequence by multiplexing the plurality of chip bit sequences; and
notification means (22) notifying the mobile terminal of spreading codes assigned to the mobile terminal so that the mobile terminal is capable of determining at least one of the butterfly computation steps prevented from being carried out as being unnecessary to retrieve those of the plurality of chip bit sequences corresponding to the respective spreading codes assigned to the mobile terminal.

6. A spreading code assigning method for assigning spreading codes for spreading symbol bit sequences, **characterized by** comprising:

a spreading code assigning step adapted for a despreading process, wherein a plurality of chip bit sequences are retrieved by subjecting to repeated butterfly computation steps a multiplexed chip bit sequence produced by a spreading process, the spreading code assigning step assigning spread codes so that the number of butterfly computation steps necessary to retrieve those of the plurality of chip bit sequences corresponding to the assigned spreading codes, respectively, is smaller than a maximum number required to retrieve the entirety of the chip bit sequences.

7. The spreading code assigning method according to claim 6, **characterized in that** the number of butterfly computation steps necessary to retrieve desired chip bit sequences is minimized.

8. The spreading code assigning method according to claim 6, **characterized in that** the despreading process includes a first stage for performing butterfly computation on successive series of two bits constructing the multiplexed chip bit sequence corresponding to a symbol, starting at the head of the sequence, and a second stage for performing butterfly computation on computation results of the first stage,
the second stage including a first computation step for performing butterfly computation on successive series of two bits constructing a bit sequence arranged in the order of output from adders of the first stage, and a second computation step for performing butterfly computation on successive series of two bits constructing a bit sequence arranged in the order of output from subtractors of the first stage, and further **characterized in that**
the spreading code assigning method assigns only those spreading codes corresponding to symbol bit sequences produced by butterfly computations including those of the first computation step and the second computation step.

9. The spreading code assigning method according to claim 6, **characterized in that** the despreading process includes a first stage for performing butterfly computation on successive series of two bits constructing the multiplexed chip bit sequence corresponding to a symbol, starting at the head of the sequence, a second stage for performing butterfly computation on computation results of the first stage, and a third stage for performing butterfly computation on computation results of the second stage,
the second stage including a first computation step for performing butterfly computation on successive series of two bits constructing a bit sequence arranged in the order of output from adders of the first stage, and a second computation step for performing butterfly computation on successive series of two bits constructing a bit sequence arranged in the order of output from subtractors of the first stage,

the third stage including a first computation step for performing butterfly computation on successive series of two bits constructing a bit sequence arranged in the order of output from adders of the first computation step of the second stage, a second computation step for performing butterfly computation on successive series of two bits constructing a bit sequence arranged in the order of output from adders of the second computation step of the second stage, a third computation step for performing butterfly computation on successive series of two bits constructing a bit sequence arranged in the order of output from subtractors of the first computation step of the second stage, and a fourth computation step for performing butterfly computation on successive series of two bits constructing a bit sequence arranged in the order of output from subtractors of the second computation step of the second stage,

the spreading code assigning method assigns only those spreading codes corresponding to symbol bit sequences produced by at most three of the first through fourth computation steps of the third stage.

10. The spreading code assigning method according to claim 9, **characterized in that** the spreading code assigning method assigns only those spreading codes corresponding to symbol bit sequences produced by a minimum of the first through fourth computation steps of the third stage.

11. The spreading code assigning method according to claim 6, **characterized in that** the despreading process includes a first stage for performing butterfly computation on successive series of two bits constructing the multiplexed chip bit sequence corresponding to a symbol, starting at the head of the sequence, a second stage for performing butterfly computation on computation results of the first stage, a third stage for performing butterfly computation on computation results of the second stage, and a fourth stage for performing butterfly computation on computation results of the third stage,

the second stage including a first computation step for performing butterfly computation on successive series of two bits constructing a bit sequence arranged in the order of output from adders of the first stage, and a second computation step for performing butterfly computation on successive series of two bits constructing a bit sequence arranged in the order of output from subtractors of the first stage,

the third stage including a first computation step for performing butterfly computation on successive series of two bits constructing a bit sequence arranged in the order of output from adders of the first computation step of the second stage, a second computation step for performing butterfly computation on successive series of two bits constructing a bit sequence arranged in the order of output from adders of the second computation step of the second stage, a third computation step for performing butterfly computation on successive series of two bits constructing a bit sequence arranged in the order of output from subtractors of the first computation step of the second stage, and a fourth computation step for performing butterfly computation on successive series of two bits constructing a bit sequence arranged in the order of output from subtractors of the second computation step of the second stage,

the fourth stage including a first computation step for performing butterfly computation on successive series of two bits constructing a bit sequence arranged in the order of output from adders of the first computation step of the third stage, a second computation step for performing butterfly computation on successive series of two bits constructing a bit sequence arranged in the order of output from adders of the second computation step of the third stage, a third computation step for performing butterfly computation on successive series of two bits constructing a bit sequence arranged in the order of output from adders of the third computation step of the third stage, a fourth computation step for performing butterfly computation on successive series of two bits constructing a bit sequence arranged in the order of output from adders of the fourth computation step of the third stage, a fifth computation step for performing butterfly computation on successive series of two bits constructing a bit sequence arranged in the order of output from subtractors of the first computation step of the third stage, a sixth computation step for performing butterfly computation on successive series of two bits constructing a bit sequence arranged in the order of output from subtractors of the second computation step of the third stage, a seventh computation step for performing butterfly computation on successive series of two bits constructing a bit sequence arranged in the order of output from subtractors of the third computation step of the third stage, and an eighth computation step for performing butterfly computation on successive series of two bits constructing a bit sequence arranged in the order of output from subtractors of the third computation step of the third stage, and further **characterized in that**

the spreading code assigning method assigns only those spreading codes corresponding to symbol bit sequences produced by at most seven of the first through eighth computation steps of the fourth stage.

12. The spreading code assigning method according to claim 11, **characterized in that** the spreading code assigning method assigns only those spreading codes corresponding to symbol bit sequences produced by a minimum of the first through eighth computation steps of the fourth stage.

**13.** A base transceiver station for wireless communication with a mobile terminal, **characterized by** comprising:

a spreading code assigning means (23) assigning spread codes for spreading symbol bit sequences and adapted for a despreading process, wherein a plurality of chip bit sequences are retrieved by subjecting to repeated butterfly computation steps a multiplexed chip bit sequence produced by a spreading process, the spreading code assigning means assigning spread codes so that the number of butterfly computation steps necessary to retrieve those of the plurality of chip bit sequences corresponding to the assigned spreading codes, respectively, is smaller than a maximum number required to retrieve the entirety of the chip bit sequences.

# FIG.1

BASE
TRANSCEIVER
STATION

12

BASE
TRANSCEIVER
STATION
CONTROLLER

13

BASE
TRANSCEIVER
STATION

12

11

11

EP 1 324 505 A1

# FIG.2

INFORMATION → CHANNEL CODING (301)

MAPPING (305) → ⊗ (306) Cch(SF,11) → ⊗ (308) G → I + jQ (310) → ⊗ (311) Cscr(M)

⊗ (307) → ⊗ (309)

(302)

Cch(SF,12) (303)

Cch(SF,15) (304)

Σ (312) → TRANSMISSION SIGNAL

RESOURCE MANAGEMENT (21) ↔ ASSIGNED CODE NOTIFICATION (22) → OTHER CHANNELS

CODE ASSIGNMENT (23)

EP 1 324 505 A1

## FIG.3

RECEIVED SIGNAL → DESPREADING 313

COMPLEX CONJUGATE 314

Cscr(M)

I + jQ

DESPREADING 315 — Cch(SF,k) → DEMAPPING 318

DESPREADING 316 — Cch(SF,k) → DEMAPPING 319

DESPREADING 317 — Cch(SF,k) → DEMAPPING 320

CHANNEL DECODING 321 → RETRIEVED INFORMATION

EP 1 324 505 A1

# FIG.4

RECEIVED SIGNAL → DESPREADING 313

COMPLEX CONJUGATE 314

Cscr(M)

FHT 322

DEMAPPING 318

DEMAPPING 319

DEMAPPING 320

CHANNEL DECODING 321 → RETRIEVED INFORMATION

OTHER CHANNELS

ASSIGNED CODE INFORMATION

EP 1 324 505 A1

# FIG.5

```
          401              402
  In1 ○         → ○ +   Out1
         ✕        + 
  In2 ○         → ○ +   Out2
                    -      403
                    404
```

RECEIVED SIGNAL
FROM 313        →   BUFFER    RETRIEVED
{r0, r1, r2, ···, r15}              SIGNAL   → TO 318
                                             → TO 319
                                             ⋮
                                             → TO 320

ASSIGNED
CODE            →   ASSIGNING   405
INFORMATION         UNIT

# FIG.10

```
              START
                │
                ▼
          ST201
     ◇ ARE CODES                  ST202
       WITH k=11,12,13,14,15  ─YES→  ASSIGN CODES WITH
       UNUSED? ◇                      k=11,12,13,14,15
                │
                │ NO   ST203
                ▼
     ASSIGN CODES WITH
     k=6,7,8,9,10
                │
                ▼
              END
```

# FIG.6

| B0(00) | B1(00) | B2(00) | B3(00) | B4(00) | Cch(16,00) |
| B0(08) | B1(04) | B2(02) | B3(01) | B4(08) | Cch(16,01) |
| B0(04) | B1(02) | B2(01) | B3(08) | B4(04) | Cch(16,02) |
| B0(12) | B1(06) | B2(03) | B3(09) | B4(12) | Cch(16,03) |
| B0(02) | B1(01) | B2(08) | B3(04) | B4(02) | Cch(16,04) |
| B0(10) | B1(05) | B2(10) | B3(05) | B4(10) | Cch(16,05) |
| B0(06) | B1(03) | B2(09) | B3(12) | B4(06) | Cch(16,06) ◎ |
| B0(14) | B1(07) | B2(11) | B3(13) | B4(14) | Cch(16,07) ◎ |
| B0(01) | B1(08) | B2(04) | B3(02) | B4(01) | Cch(16,08) ◎ |
| B0(09) | B1(12) | B2(06) | B3(03) | B4(09) | Cch(16,09) ◎ |
| B0(05) | B1(10) | B2(05) | B3(10) | B4(05) | Cch(16,10) ◎ |
| B0(13) | B1(14) | B2(07) | B3(11) | B4(13) | Cch(16,11) ◎ |
| B0(03) | B1(09) | B2(12) | B3(06) | B4(03) | Cch(16,12) ◎ |
| B0(11) | B1(13) | B2(14) | B3(07) | B4(11) | Cch(16,13) ◎ |
| B0(07) | B1(11) | B2(13) | B3(14) | B4(07) | Cch(16,14) ◎ |
| B0(15) | B1(15) | B2(15) | B3(15) | B4(15) | Cch(16,15) ◎ |

EP 1 324 505 A1

# FIG.7

| B0(00) | B1(00) | B2(00) | B3(00) | B4(00) | → | Cch(16,00) |
| B0(08) | B1(04) | B2(02) | B3(01) | B4(08) | → | Cch(16,01) |
| B0(04) | B1(02) | B2(01) | B3(08) | B4(04) | → | Cch(16,02) |
| B0(12) | B1(06) | B2(03) | B3(09) | B4(12) | → | Cch(16,03) |
| B0(02) | B1(01) | B2(08) | B3(04) | B4(02) | → | Cch(16,04) |
| B0(10) | B1(05) | B2(10) | B3(05) | B4(10) | → | Cch(16,05) |
| B0(06) | B1(03) | B2(09) | B3(12) | B4(06) | → | Cch(16,06) |
| B0(14) | B1(07) | B2(11) | B3(13) | B4(14) | → | Cch(16,07) |
| B0(01) | B1(08) | B2(04) | B3(02) | B4(01) | → | Cch(16,08) |
| B0(09) | B1(12) | B2(06) | B3(03) | B4(09) | → | Cch(16,09) |
| B0(05) | B1(10) | B2(05) | B3(10) | B4(05) | → | Cch(16,10) |
| B0(13) | B1(14) | B2(07) | B3(11) | B4(13) | → | Cch(16,11) ◎ |
| B0(03) | B1(09) | B2(12) | B3(06) | B4(03) | → | Cch(16,12) ◎ |
| B0(11) | B1(13) | B2(14) | B3(07) | B4(11) | → | Cch(16,13) ◎ |
| B0(07) | B1(11) | B2(13) | B3(14) | B4(07) | → | Cch(16,14) ◎ |
| B0(15) | B1(15) | B2(15) | B3(15) | B4(15) | → | Cch(16,15) ◎ |

EP 1 324 505 A1

EP 1 324 505 A1

# FIG.8

| | | | | | |
|---|---|---|---|---|---|
| B0(00) | B1(00) | B2(00) | B3(00) | B4(00) | → Cch(16,00) |
| B0(08) | B1(04) | B2(02) | B3(01) | B4(08) | → Cch(16,01) |
| B0(04) | B1(02) | B2(01) | B3(08) | B4(04) | → Cch(16,02) |
| B0(12) | B1(06) | B2(03) | B3(09) | B4(12) | → Cch(16,03) |
| B0(02) | B1(01) | B2(08) | B3(04) | B4(02) | → Cch(16,04) |
| B0(10) | B1(05) | B2(10) | B3(05) | B4(10) | → Cch(16,05) |
| B0(06) | B1(03) | B2(09) | B3(12) | B4(06) | → Cch(16,06) ◎ |
| B0(14) | B1(07) | B2(11) | B3(13) | B4(14) | → Cch(16,07) ◎ |
| B0(01) | B1(08) | B2(04) | B3(02) | B4(01) | → Cch(16,08) ◎ |
| B0(09) | B1(12) | B2(06) | B3(03) | B4(09) | → Cch(16,09) ◎ |
| B0(05) | B1(10) | B2(05) | B3(10) | B4(05) | → Cch(16,10) ◎ |
| B0(13) | B1(14) | B2(07) | B3(11) | B4(13) | → Cch(16,11) |
| B0(03) | B1(09) | B2(12) | B3(06) | B4(03) | → Cch(16,12) |
| B0(11) | B1(13) | B2(14) | B3(07) | B4(11) | → Cch(16,13) |
| B0(07) | B1(11) | B2(13) | B3(14) | B4(07) | → Cch(16,14) |
| B0(15) | B1(15) | B2(15) | B3(15) | B4(15) | → Cch(16,15) |

34

# FIG.9

| B0(00) | B1(00) | B2(00) | B3(00) | B4(00) | Cch(16,00) |
|--------|--------|--------|--------|--------|------------|
| B0(08) | B1(04) | B2(02) | B3(01) | B4(08) | Cch(16,01) |
| B0(04) | B1(02) | B2(01) | B3(08) | B4(04) | Cch(16,02) |
| B0(12) | B1(06) | B2(03) | B3(09) | B4(12) | Cch(16,03) |
| B0(02) | B1(01) | B2(08) | B3(04) | B4(02) | Cch(16,04) |
| B0(10) | B1(05) | B2(10) | B3(05) | B4(10) | Cch(16,05) |
| B0(06) | B1(03) | B2(09) | B3(12) | B4(06) | Cch(16,06) |
| B0(14) | B1(07) | B2(11) | B3(13) | B4(14) | Cch(16,07) ◎ |
| B0(01) | B1(08) | B2(04) | B3(02) | B4(01) | Cch(16,08) |
| B0(09) | B1(12) | B2(06) | B3(03) | B4(09) | Cch(16,09) ◎ |
| B0(05) | B1(10) | B2(05) | B3(10) | B4(05) | Cch(16,10) |
| B0(13) | B1(14) | B2(07) | B3(11) | B4(13) | Cch(16,11) ◎ |
| B0(03) | B1(09) | B2(12) | B3(06) | B4(03) | Cch(16,12) |
| B0(11) | B1(13) | B2(14) | B3(07) | B4(11) | Cch(16,13) ◎ |
| B0(07) | B1(11) | B2(13) | B3(14) | B4(07) | Cch(16,14) |
| B0(15) | B1(15) | B2(15) | B3(15) | B4(15) | Cch(16,15) ◎ |

EP 1 324 505 A1

# FIG.11

```
                    ┌──────────┐
                    │  START   │
                    └────┬─────┘
                         │
                         ▼            ST501
                    ╱───────────╲
                   ╱  ARE CODES  ╲      YES ──────────────────────────────┐
                  ╱  WITH k=14,15 ╲─────────────────────────────┐         │
                   ╲   UNUSED?    ╱                              │    ST505│
                    ╲───────────╱                               │         │
                         │ NO                              ┌─────▼──────┐  │
                         ▼            ST502                │ASSIGN CODES│  │
                    ╱───────────╲                         │WITH k=14,15│  │
                   ╱  ARE CODES  ╲      YES ───────────┐   └─────┬──────┘  │
                  ╱  WITH k=12,13 ╲────────────────┐   │        │         │
                   ╲   UNUSED?    ╱                │   │   ST506 │         │
                    ╲───────────╱                 │   │         │         │
                         │ NO                ┌─────▼──────┐      │         │
                         ▼            ST503  │ASSIGN CODES│      │         │
                    ╱───────────╲            │WITH k=12,13│      │         │
                   ╱  ARE CODES  ╲    YES ─┐ └─────┬──────┘      │         │
                  ╱  WITH k=10,11 ╲──────┐ │       │            │         │
                   ╲   UNUSED?    ╱      │ │  ST507 │            │         │
                    ╲───────────╱       │ │        │            │         │
                         │ NO      ┌────▼──────┐   │            │         │
                         ▼   ST504 │ASSIGN CODES│  │            │         │
                    ╱───────────╲  │WITH k=10,11│  │            │         │
                   ╱  ARE CODES  ╲ └────┬──────┘   │            │         │
                  ╱  WITH k=8,9   ╲ YES │          │            │         │
                   ╲   UNUSED?    ╱──┐  │          │            │         │
                    ╲───────────╱   │  │          │            │         │
                      │ NO  ST509   │ ST508        │            │         │
                      ▼             ▼              │            │         │
              ┌────────────┐ ┌────────────┐        │            │         │
              │ASSIGN CODES│ │ASSIGN CODES│        │            │         │
              │WITH k=6,7  │ │WITH k=8,9  │        │            │         │
              └─────┬──────┘ └─────┬──────┘        │            │         │
                    │              │               │            │         │
                    │              ▼               ▼            ▼         ▼
                    ├──────────────────────────────────────────────────────
                    ▼
                ┌───────┐
                │  END  │
                └───────┘
```

FIG.12

# FIG.13

```
                    ┌──────────────┐
                    │    START     │
                    └──────────────┘
                            │
                            ▼                    ST601
                    ╱──────────────╲
                   ╱   ARE CODES     ╲      YES
                  ╱  WITH k=27,28,29,30,31 ╲─────────────────────────────┐
                   ╲    UNUSED?     ╱                                     │
                    ╲──────────────╱                                     │
                            │NO                                          ▼        ST604
                            │                                  ┌────────────────────────┐
                            ▼                    ST602         │ ASSIGN CODES WITH      │
                    ╱──────────────╲                          │ k=27,28,29,30,31       │
                   ╱   ARE CODES     ╲      YES                └────────────────────────┘
                  ╱  WITH k=22,23,24,25,26 ╲──────────────┐                   │
                   ╲    UNUSED?     ╱                      │                   │
                    ╲──────────────╱                      ▼       ST605        │
                            │NO                  ┌────────────────────┐        │
                            │                    │ ASSIGN CODES WITH  │        │
                            ▼                    │ k=22,23,24,25,26   │        │
                    ╱──────────────╲             └────────────────────┘        │
                   ╱   ARE CODES     ╲  YES              │                      │
                  ╱  WITH k=17,18,19,20,21 ╲──────┐      │                      │
                   ╲    UNUSED?     ╱            │      │                      │
                    ╲──────────────╱             │      │                      │
                            │NO    ST607         │ ST606 │                      │
                            ▼                    ▼      │                      │
        ┌────────────────────┐  ┌────────────────────┐ │                      │
        │ ASSIGN CODES WITH  │  │ ASSIGN CODES WITH  │ │                      │
        │ k=12,13,14,15,16   │  │ k=17,18,19,20,21   │ │                      │
        └────────────────────┘  └────────────────────┘ │                      │
                   │                    │      │        │                      │
                   │◄───────────────────┴──────┴────────┴──────────────────────┘
                   ▼
            ┌──────────────┐
            │     END      │
            └──────────────┘
```

# FIG.14

# FIG.15

B3(00) ⋯⋯> B4(00) ⋯⋯> B5(00) ⟶ Cch(32,00)

B3(02) ⋯⋯> B4(01) ⋯⋯> B5(16) ⟶ Cch(32,01)

B3(01) ⋯⋯> B4(16) ⋯⋯> B5(08) ⟶ Cch(32,02)

B3(03) ⋯⋯> B4(17) ⋯⋯> B5(24) ⟶ Cch(32,03)

B3(16) ⋯⋯> B4(08) ⋯⋯> B5(04) ⟶ Cch(32,04)

B3(18) ⋯⋯> B4(09) ⋯⋯> B5(20) ⟶ Cch(32,05)

B3(17) ⋯⋯> B4(24) ⋯⋯> B5(12) ⟶ Cch(32,06)

B3(19) ⋯⋯> B4(25) ⋯⋯> B5(28) ⟶ Cch(32,07)

B3(08) ⋯⋯> B4(04) ⋯⋯> B5(02) ⟶ Cch(32,08)

B3(10) ⋯⋯> B4(05) ⋯⋯> B5(18) ⟶ Cch(32,09)

B3(09) ⋯⋯> B4(20) ⋯⋯> B5(10) ⟶ Cch(32,10)

B3(11) ⋯⋯> B4(21) ⋯⋯> B5(26) ⟶ Cch(32,11)

B3(24) ⋯⋯> B4(12) ⋯⋯> B5(06) ⟶ Cch(32,12)

B3(26) ⋯⋯> B4(13) ⋯⋯> B5(22) ⟶ Cch(32,13)

B3(25) ⋯⋯> B4(28) ⋯⋯> B5(14) ⟶ Cch(32,14)

B3(27) ⋯⋯> B4(29) ⋯⋯> B5(30) ⟶ Cch(32,15)

B3(04) ⋯⋯> B4(02) ⋯⋯> B5(01) ⟶ Cch(32,16)

B3(06) ⋯⋯> B4(03) ⋯⋯> B5(17) ⟶ Cch(32,17)

B3(05) ⋯⋯> B4(18) ⋯⋯> B5(09) ⟶ Cch(32,18)

B3(07) ⋯⋯> B4(19) ⋯⋯> B5(25) ⟶ Cch(32,19)

B3(20) ⋯⋯> B4(10) ⋯⋯> B5(05) ⟶ Cch(32,20)

B3(22) ⋯⋯> B4(11) ⋯⋯> B5(21) ⟶ Cch(32,21)

B3(21) ⋯⋯> B4(26) ⋯⋯> B5(13) ⟶ Cch(32,22)

B3(23) ⋯⋯> B4(27) ⋯⋯> B5(29) ⟶ Cch(32,23)

B3(12) ⟶ B4(06) ⋯⋯> B5(03) ⟶ Cch(32,24)

B3(14) ⟶ B4(07) ⋯⋯> B5(19) ⟶ Cch(32,25)

B3(13) ⟶ B4(22) ⟶ B5(11) ⟶ Cch(32,26)

B3(15) ⟶ B4(23) ⟶ B5(27) ⟶ Cch(32,27) ◎

B3(28) ⟶ B4(14) ⟶ B5(07) ⟶ Cch(32,28) ◎

B3(30) ⟶ B4(15) ⟶ B5(23) ⟶ Cch(32,29) ◎

B3(29) ⟶ B4(30) ⟶ B5(15) ⟶ Cch(32,30) ◎

B3(31) ⟶ B4(31) ⟶ B5(31) ⟶ Cch(32,31) ◎

# FIG.16

START

**ST701** PRIMARY SCRAMBLING CODE?

YES →

**ST705** CH CODES ASSIGNMENT WITH PRIMARY SCRAMBLING CODE

NO ↓

**ST702** ARE CODES WITH k=11,12,13,14,15 UNUSED?

YES →

**ST706** ASSIGN CODES WITH k=11,12,13,14,15

NO ↓

**ST703** ARE CODES WITH k=00,01,02,03,04 UNUSED?

YES →

NO ↓

**ST704** ASSIGN CODES WITH k=06,07,08,09,10

**ST707** ASSIGN CODES WITH k=00,01,02,03,04

END

# FIG.17

| B0(00) | B1(00) | B2(00) | B3(00) | B4(00) | → Cch(16,00) ◎ |
| B0(08) | B1(04) | B2(02) | B3(01) | B4(08) | → Cch(16,01) ◎ |
| B0(04) | B1(02) | B2(01) | B3(08) | B4(04) | → Cch(16,02) ◎ |
| B0(12) | B1(06) | B2(03) | B3(09) | B4(12) | → Cch(16,03) ◎ |
| B0(02) | B1(01) | B2(08) | B3(04) | B4(02) | → Cch(16,04) ◎ |
| B0(10) | B1(05) | B2(10) | B3(05) | B4(10) | → Cch(16,05) |
| B0(06) | B1(03) | B2(09) | B3(12) | B4(06) | → Cch(16,06) |
| B0(14) | B1(07) | B2(11) | B3(13) | B4(14) | → Cch(16,07) |
| B0(01) | B1(08) | B2(04) | B3(02) | B4(01) | → Cch(16,08) |
| B0(09) | B1(12) | B2(06) | B3(03) | B4(09) | → Cch(16,09) |
| B0(05) | B1(10) | B2(05) | B3(10) | B4(05) | → Cch(16,10) |
| B0(13) | B1(14) | B2(07) | B3(11) | B4(13) | → Cch(16,11) |
| B0(03) | B1(09) | B2(12) | B3(06) | B4(03) | → Cch(16,12) |
| B0(11) | B1(13) | B2(14) | B3(07) | B4(11) | → Cch(16,13) |
| B0(07) | B1(11) | B2(13) | B3(14) | B4(07) | → Cch(16,14) |
| B0(15) | B1(15) | B2(15) | B3(15) | B4(15) | → Cch(16,15) |

EP 1 324 505 A1

# FIG.18

```
        ┌──────────────┐
        │    START     │
        └──────────────┘
               │
               │        ST801
               ▼
          ╱─────────╲
         ╱ ARE CODES ╲     YES
        ╱ WITH k=13,03,11,07,15 ╲──────────────┐
        ╲  UNUSED?  ╱                          │
         ╲─────────╱                           │         ST803
               │ NO                            ▼
               │          ST802      ┌────────────────────────┐
               ▼                     │ ASSIGN CODES WITH      │
          ╱─────────╲                │ k=13,03,11,07,15       │
         ╱ ARE CODES ╲    YES        └────────────────────────┘
        ╱ WITH k=06,14,01,09,05 ╲──────────┐            │
        ╲  UNUSED?  ╱                       │            │
         ╲─────────╱                        │            │
               │ NO    ST805                │            │
               ▼                            ▼  ST804     │
   ┌────────────────────────┐    ┌────────────────────────┐
   │ ASSIGN CODES WITH      │    │ ASSIGN CODES WITH      │
   │ k=08,04,12,02,10       │    │ k=06,14,01,09,05       │
   └────────────────────────┘    └────────────────────────┘
               │                            │            │
               │◄───────────────────────────┴────────────┘
               ▼
        ┌──────────────┐
        │     END      │
        └──────────────┘
```

# FIG.19

EP 1 324 505 A1

| B0(00) | B1(00) | B2(00) | B3(00) | B4(00) | W(16,00) |
| B0(08) | B1(04) | B2(02) | B3(01) | B4(08) | W(16,08) |
| B0(04) | B1(02) | B2(01) | B3(08) | B4(04) | W(16,04) |
| B0(12) | B1(06) | B2(03) | B3(09) | B4(12) | W(16,12) |
| B0(02) | B1(01) | B2(08) | B3(04) | B4(02) | W(16,02) |
| B0(10) | B1(05) | B2(10) | B3(05) | B4(10) | W(16,10) |
| B0(06) | B1(03) | B2(09) | B3(12) | B4(06) | W(16,06) |
| B0(14) | B1(07) | B2(11) | B3(13) | B4(14) | W(16,14) |
| B0(01) | B1(08) | B2(04) | B3(02) | B4(01) | W(16,01) |
| B0(09) | B1(12) | B2(06) | B3(03) | B4(09) | W(16,09) |
| B0(05) | B1(10) | B2(05) | B3(10) | B4(05) | W(16,05) |
| B0(13) | B1(14) | B2(07) | B3(11) | B4(13) | W(16,13) ◎ |
| B0(03) | B1(09) | B2(12) | B3(06) | B4(03) | W(16,03) ◎ |
| B0(11) | B1(13) | B2(14) | B3(07) | B4(11) | W(16,11) ◎ |
| B0(07) | B1(11) | B2(13) | B3(14) | B4(07) | W(16,07) ◎ |
| B0(15) | B1(15) | B2(15) | B3(15) | B4(15) | W(16,15) ◎ |

# FIG.20

SF=16

| |
|---|
| Cch(16,00) |
| Cch(16,01) |
| Cch(16,02) |
| Cch(16,03) |
| Cch(16,04) |
| Cch(16,05) |
| Cch(16,06) |
| Cch(16,07) |
| Cch(16,08) |
| Cch(16,09) |
| Cch(16,10) |
| Cch(16,11) |
| Cch(16,12) |
| Cch(16,13) |
| Cch(16,14) |
| Cch(16,15) |

USER 1
USER 2
USER 1
USER 2
USER 1
USER 2
USER 1
USER 2
USER 1
USER 2

USER 1

USER 2

USED IN PACKET CHANNEL
(A TOTAL OF 10 CODES)

**European Patent Office**

# PARTIAL EUROPEAN SEARCH REPORT

which under Rule 45 of the European Patent Convention shall be considered, for the purposes of subsequent proceedings, as the European search report

**Application Number**

EP 02 01 7812

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 993 127 A (TEXAS INSTRUMENTS INC) 12 April 2000 (2000-04-12) * abstract; figures 3,4 * * page 3, line 4 - line 6 * * page 3, paragraph 10 - paragraph 11 * * page 4, paragraph 13 - page 5, paragraph 14 * --- | 6-13 | H04B1/707 |
| A | WO 99 10818 A (QUALCOMM INC) 4 March 1999 (1999-03-04) * abstract; figures 3A-3C * * page 3, line 4 - line 7 * --- | 6-13 | |
| A | BI GUOAN ET AL: "Hardware structure for Walsh-Hadamard transforms" ELECTRONICS LETTERS, IEE STEVENAGE, GB, vol. 34, no. 21, 15 October 1998 (1998-10-15), pages 2005-2006, XP006010460 ISSN: 0013-5194 * the whole document * --- -/-- | 6-13 | |

| | | | TECHNICAL FIELDS SEARCHED (Int.Cl.7) |
|---|---|---|---|
| | | | H04B G06F |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 2 April 2003 | Ricciardi, M |

EPO FORM 1503 03.82 (P04C07)

European Patent
Office

INCOMPLETE SEARCH
SHEET C

Application Number

EP 02 01 7812

Claim(s) searched completely:
    6-13

Claim(s) not searched:
    1-5

Reason for the limitation of the search:

Present claims 1-5 relate to a method defined by reference to a desirable characteristic or property, namely

Claim 1: [...] PREVENTION of butterfly computation steps other than those steps NECESSARY to retrieve those of the plurality of chip bit sequences.
Claim 2: [...] butterfly computation steps other than those steps NECESSARY to retrieve [...] are PREVENTED.
Claim 3: [...] omitting means PREVENTING at least one of the butterfly computation steps other than those steps NECESSARY to retrieve those of the chip bit sequences [...]
Claim 4: [...] butterfly computation steps PREVENTE from being carried out, based on the spreading codes [...]
Claim 5: [...] notification means [...] so that the mobile terminal is capable of determining at least one of the butterfly computation steps PREVENTED from being carried out as being UNNECESSARY to retrieve [...].

The claims cover all methods having this characteristic or property, whereas the application provides support within the meaning of Article 84 EPC or disclosure within the meaning of Article 83 EPC for only a very limited number of such methods. In the present case, the claims so lack support, and the application so lacks disclosure, that a meaningful search over the whole of the claimed scope is impossible. Independent of the above reasoning, the claims also lack clarity (Article 84 EPC). An attempt is made to define the method by reference to a result to be achieved. Again, this lack of clarity in the present case is such as to render a meaningful search over the whole of the claimed scope impossible. Consequently, the search has been carried out for those parts of the claims which appear to be clear, supported and disclosed, namely those parts relating to the subject-matter as defined in claims 6-13.

**PARTIAL EUROPEAN SEARCH REPORT**

Application Number

EP 02 01 7812

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | ANTOLA A ET AL: "The flexibility dedicated approach: reconfigurable arrays for low-level image processing" COMPUTERS AND COMMUNICATIONS, 1989. CONFERENCE PROCEEDINGS., EIGHTH ANNUAL INTERNATIONAL PHOENIX CONFERENCE ON SCOTTSDALE, AZ, USA 22-24 MARCH 1989, WASHINGTON, DC, USA,IEEE COMPUT. SOC. PR, US, 22 March 1989 (1989-03-22), pages 149-154, XP010015253 ISBN: 0-8186-1918-X p. 152, section 3 --- | 6-13 | |
| A | DRYGAJLO A: "Butterfly orthogonal structure for fast transforms, filter banks and wavelets" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, vol. 5 CONF. 17, 23 March 1992 (1992-03-23), pages 81-84, XP010059289 ISBN: 0-7803-0532-9 * page V-81, right-hand column - page V-82, left-hand column * ----- | 6-13 | TECHNICAL FIELDS SEARCHED (Int.Cl.7) |

EPO FORM 1503 03.82 (P04C10)

**ANNEX TO THE EUROPEAN SEARCH REPORT
ON EUROPEAN PATENT APPLICATION NO.**                    EP 02 01 7812

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2003

| Patent document cited in search report | | Publication date | Patent family member(s) | | Publication date |
|---|---|---|---|---|---|
| EP 0993127 | A | 12-04-2000 | EP | 0993127 A1 | 12-04-2000 |
| WO 9910818 | A | 04-03-1999 | AU | 9030298 A | 16-03-1999 |
| | | | CN | 1268231 T | 27-09-2000 |
| | | | EP | 1018082 A1 | 12-07-2000 |
| | | | WO | 9910818 A1 | 04-03-1999 |

For more details about this annex : see Official Journal of the European Patent Office, No. 12/82